# EUROPÄISCHE PATENTANMELDUNG

(11) **EP 4 600 507 A1**
(43) Veröffentlichungstag der Anmeldung: **13.08.2025**
(21) Anmeldenummer: 25153881.5
(22) Anmeldetag: 24.01.2025
(51) Int. Cl.: F16B 5/02, E04B 1/00, E04B 2/00, F16B 5/06, F16B 25/00, F16B 35/06

(54) **VORRICHTUNG ZUM AUSRICHTEN VON BAUTEILEN UND ANORDNUNG**

(30) Priorität: 12.02.2024 DE 102024103837; 29.04.2024 DE 202024102184 U
(71) Anmelder: Adolf Würth GmbH & Co. KG, 74653 Künzelsau (DE)
(72) Erfinder: RÖVER, Dennis, 74653 Künzelsau (DE); WIED, Eberhard, 74427 Fichtenberg (DE)
(74) Vertreter: Patentanwälte Ruff, Wilhelm, Beier, Dauster & Partner mbB

(57) **Zusammenfassung**

Die Erfindung betrifft eine Vorrichtung zum Ausrichten von Bauteilen, insbesondere von Wandelementen oder Wandscheiben im Holzbau, mit einer Betonschraube, wobei die Betonschraube einen Schraubenschaft mit einem Gewinde und einen Schraubenkopf mit einer Antriebsausbildung aufweist, wobei eine Lastplatte vorgesehen ist, wobei die Lastplatte wenigstens im montierten Zustand der Vorrichtung mit der Betonschraube verbunden ist und wobei die Betonschraube im Bereich ihres Schraubenkopfs zum Anbringen wenigstens eines Befestigungsmittels, insbesondere eine Schraube oder eine Mutter, zum Fixieren eines auf der Lastplatte aufliegenden Bauteils relativ zur Lastplatte ausgebildet ist.

## Beschreibung

Die Erfindung betrifft eine Vorrichtung zum Ausrichten von Bauteilen, insbesondere von Wandelementen oder Wandscheiben im Holzbau, mit einer Betonschraube, wobei die Betonschraube einen Schraubenschaft mit einem Gewinde und einen Schraubenkopf mit einer Antriebsausbildung aufweist. Die Erfindung betrifft auch eine Anordnung mit wenigstens zwei erfindungsgemäßen Vorrichtungen, einem Bauteil und einem Fundament.

Aus der internationalen Offenlegungsschrift WO 2022/229183 A1 ist eine Vorrichtung zum Ausrichten von Wandelementen oder Wandscheiben im Holzbau mit einer Betonschraube bekannt, wobei die Betonschraube einen Schraubenschaft mit einem Gewinde und einen Schraubenkopf mit einer Antriebsausbildung aufweist. Der Schraubenkopf ist kreisscheibenförmig ausgebildet und weist eine ebene, glatte Oberfläche auf. Zu beiden Seiten des Schraubenschafts ist jeweils eine Durchgangsöffnung im Schraubenkopf vorgesehen. Diese beiden Durchgangsöffnungen bilden eine Antriebsausbildung, um die Betonschraube mithilfe eines Spezialschlüssels einschrauben zu können.

Mit der Erfindung sollen eine Vorrichtung zum Ausrichten von Bauteilen und eine Anordnung verbessert werden.

Erfindungsgemäß ist hierzu eine Vorrichtung zum Ausrichten von Bauteilen mit den Merkmalen von Anspruch 1 beziehungsweise eine Anordnung mit den Merkmalen von Anspruch 15 vorgesehen. Vorteilhafte Weiterbildungen der Erfindung sind in den Unteransprüchen genannt.

Bei einer Vorrichtung zum Ausrichten von Bauteilen, insbesondere von Wandelementen oder Wandscheiben im Holzbau, ist eine Betonschraube vorgesehen, wobei die Betonschraube einen Schraubenschaft mit einem Gewinde und einen Schraubenkopf mit einer Antriebsausbildung aufweist. Es ist eine Lastplatte vorgesehen, wobei die Lastplatte wenigstens im montierten Zustand der Vorrichtung mit der Betonschraube verbunden ist. Die Betonschraube ist im Bereich ihres Schraubenkopfs zum Anbringen wenigstens eines Befestigungsmittels, insbesondere eine Schraube oder eine Mutter, zum Fixieren eines auf der Lastplatte aufliegenden Bauteils relativ zur Lastplatte ausgebildet.

Die erfindungsgemäße Vorrichtung kann dadurch zum einen zum Ausrichten von Bauteilen verwendet werden, die auf der Lastplatte aufliegen. Um eine Höhenposition des Bauteils über einem Fundament, in das die Betonschraube eingreift, einzustellen, wird die Betonschraube gedreht, so dass sich die Höhe der Lastplatte über dem Fundament verändert und dadurch auch das Niveau des auf der Lastplatte aufliegenden Bauteils. Zum anderen kann mit der erfindungsgemäßen Vorrichtung das auf der Lastplatte aufliegende Bauteil gegen Zugkräfte vom Fundament weg gesichert werden. Hierzu ist die Betonschraube im Bereich ihres Schraubenkopfs zum Anbringen wenigstens eines Befestigungsmittels zum Fixieren eines auf der Lastplatte aufliegenden Bauteils relativ zur Lastplatte ausgebildet. Die erfindungsgemäße Vorrichtung kann damit ein auf der Lastplatte aufliegendes Bauteil, beispielsweise gegen Windsogkräfte, sichern. Gegebenenfalls kann die erfindungsgemäße Vorrichtung das auf der Lastplatte aufliegende Bauteil auch gegenüber Kräften parallel zur Oberfläche des Fundaments bzw. senkrecht zum Schraubenschaft der Betonschraube sichern. Die erfindungsgemäße Vorrichtung weist beispielsweise eine Betonschraube auf, die als Stockschraube mit einem Betongewinde und einem weiteren Befestigungsgewinde im Bereich des Schraubenkopfs ausgebildet ist. Die erfindungsgemäße Vorrichtung kann auch eine Betonschraube aufweisen, die mit einem Gewindezapfen am Schraubenkopf versehen ist, also beispielsweise ein Gewindezapfen, der sich von einem Schraubenkopf mit einer Antriebsausbildung in eine Richtung gegenüberliegend zum Betongewinde erstreckt. Alternativ kann die erfindungsgemäße Vorrichtung auch eine Betonschraube aufweisen, die mit einer Gewindebohrung im Schraubenkopf versehen ist, um dort eine Schraube, eine Gewindestange oder dergleichen einschrauben zu können. Mittels der erfindungsgemäßen Vorrichtung kann dadurch ein Bauteil, beispielsweise ein Wandelement, eine Wandscheibe oder auch ein Schwellholz, zwischen der Lastplatte und dem Befestigungsmittel dadurch fixiert werden, dass das Bauteil mittels des Befestigungsmittels gegen die Lastplatte vorgespannt wird.

In Weiterbildung der Erfindung ist der Schraubenkopf der Betonschraube mit einem Gewindezapfen versehen, der eine Verlängerung des Schraubenschafts bildet.

Auf diese Weise kann ein Bauteil in sehr einfacher Weise an der erfindungsgemäßen Vorrichtung befestigt werden, indem beispielsweise der Gewindezapfen durch eine Durchgangsöffnung am Bauteil gesteckt wird und eine Mutter, gegebenenfalls mit Beilagscheibe, dann das Bauteil gegen die Lastplatte vorspannt.

In Weiterbildung der Erfindung weist die Betonschraube einen Auflageflansch für die Lastplatte auf, wobei der Auflageflansch zwischen dem Schraubenschaft und dem Gewindezapfen angeordnet ist.

Auf diese Weise können die Lastplatte und die Betonschraube als separate Elemente ausgebildet sein. Dies erleichtert die Herstellung der erfindungsgemäßen Vorrichtung erheblich.

In Weiterbildung der Erfindung ist die Betonschraube als Stockschraube ausgebildet und angrenzend an den Schraubenkopf mit einem Befestigungsgewinde versehen. Der Schraubenkopf bildet bei einer Stockschraube ein freies Ende des Schraubenschafts und ist üblicherweise mit einer Antriebsausbildung versehen. An diesen Schraubenkopf schließt sich dann das Befestigungsgewinde an. Das Befestigungsgewinde kann auch dazu verwendet werden, die Lastplatte am Schraubenschaft zu befestigen. Alternativ ist zwischen dem Befestigungsgewinde und dem Betongewinde ein Auflageflansch für die Lastplatte vorgesehen.

In Weiterbildung der Erfindung ist der Schraubenkopf der Betonschraube mit einer Innengewindebohrung versehen.

Auch auf diese Weise kann ein als Gewindestange oder Schraube ausgebildetes Befestigungsmittel in sehr einfacher Weise mit dem Schraubenschaft der Betonschraube verbunden werden.

In Weiterbildung der Erfindung weist das Befestigungsmittel eine Mutter, eine Beilagscheibe, eine Gewindemuffe und/oder eine Gewindestange auf.

Das Befestigungsmittel kann infolgedessen als Standardteil ausgebildet sein oder mehrere Standardteile aufweisen, wobei solche Standardteile günstig und leicht verfügbar sind.

In Weiterbildung der Erfindung sind die Betonschraube und die Lastplatte als separate Teile ausgebildet.

Auf diese Weise wird die Herstellung der erfindungsgemäßen Vorrichtung stark vereinfacht. Auch die Materialauswahl von Betonschraube und Lastplatte kann so gewählt werden, dass die auftretenden mechanischen Belastungen erfüllt werden, für den jeweils auftretenden Lastfall aber ein besonders gut geeignetes Material verwendet wird. Beispielsweise kann die Betonschraube aus hochfestem Stahl und die Lastplatte aus einfachem Stahl, verzinktem Stahl oder nichtrostendem Stahl, aus Nichteisenmetallen, insbesondere Aluminium, aus Holzwerkstoff, insbesondere Furnierschichtholz, oder aus Kunststoff hergestellt werden.

In Weiterbildung der Erfindung weist die Betonschraube einen Auflageflansch auf und die Lastplatte liegt wenigstens im montierten Zustand der Vorrichtung auf dem Auflageflansch der Betonschraube auf.

Der Auflageflansch der Betonschraube kann unmittelbar an eine Antriebsausbildung am Schraubenkopf der Betonschraube angrenzen oder, insbesondere bei einer Stockschraube, am Schraubenschaft oberhalb des Betongewindes angeordnet sein. Der Auflageflansch kann auch an einer Mutter ausgebildet sein, die auf ein Gewinde der Betonschraube aufgeschraubt ist.

In Weiterbildung der Erfindung ist der Auflageflansch auf seiner, der Lastplatte zugewandten Seite konvex abgerundet ausgebildet.

Auf diese Weise wird eine sichere Auflage der Lastplatte auf dem Auflageflansch auch in einem leicht verkippten Zustand sichergestellt. Die Lastplatte kann dadurch nicht nur eine exakt senkrechte Lage zur Mittellängsachse des Schraubenschafts einnehmen, sondern auch abweichend von der senkrechten Ausrichtung auf dem Schraubenschaft aufliegen. Dies kann beispielsweise vorteilhaft sein, wenn der Schraubenschaft der Betonschraube leicht schräg zur Vertikalen in das Fundament eingebracht wurde oder wenn eine Unterseite eines auszurichtenden Bauteils leicht schräg zur Horizontalen angeordnet ist.

In Weiterbildung der Erfindung kann im verbundenen Zustand von Lastplatte und Betonschraube die Lastplatte relativ zum Schraubenschaft um Kippachsen senkrecht zur Mittellängsachse des Schraubenschafts um einen kleinen Winkel, insbesondere um einen Winkel zwischen +10° und -10°, verkippt werden.

Auf diese Weise können Bauteiltoleranzen oder auch Montagetoleranzen ausgeglichen werden. Beispielsweise kann die Unterseite eines auszurichtenden Bauteils nicht exakt horizontal ausgerichtet sein oder die Betonschraube ist nicht exakt vertikal in das Fundament eingebracht.

In Weiterbildung der Erfindung weist die Lastplatte eine mittige Antriebsausbildung auf, die an die Antriebsausbildung der Betonschraube angepasst ist, wobei im montierten Zustand der Vorrichtung die mittige Antriebsausbildung der Lastplatte an der Antriebsausbildung der Betonschraube angreift oder in die Antriebsausbildung der Betonschraube eingreift, so dass von der Lastplatte auf die Betonschraube ein Drehmoment zum Einschrauben oder Ausschrauben des Gewindes der Betonschraube übertragbar ist, und wobei die mittige Antriebsausbildung der Lastplatte und die Antriebsausbildung der Betonschraube so ausgebildet sind, dass die Lastplatte relativ zum Schraubenschaft um Kippachsen senkrecht zur Mittellängsachse des Schraubenschafts um einen kleinen Winkel, insbesondere um einen Winkel zwischen +10° und -10°, verkippt werden kann.

Beispielsweise greift die mittige Antriebsausbildung der Lastplatte mit Spiel an der Antriebsausbildung der Betonschraube an. Dieses Spiel ist gerade so groß, dass die Lastplatte relativ zur Antriebsausbildung der Betonschraube um einen Winkel zwischen +10° und -10° verkippt werden kann. Das Spiel zwischen der mittigen Antriebsausbildung der Lastplatte und der Antriebsausbildung der Betonschraube ist aber ausreichend klein, um eine sichere Drehmomentübertragung von der Lastplatte auf die Betonschraube sicherzustellen, so dass also durch Drehen der Lastplatte die Betonschraube in einem Zustand, in dem sie mit ihrem Betongewinde in das Fundament eingreift, eingeschraubt oder ausgeschraubt werden kann.

In Weiterbildung der Erfindung weist die Betonschraube, insbesondere der Kopf der Betonschraube, einen Auflageflansch zum Auflegen der Lastplatte auf, wobei der Auflageflansch auf seiner, der Lastplatte zugewandten Seite konvex abgerundet ausgebildet ist.

Auf diese Weise wird ein Verkippen der Lastplatte relativ zum Schraubenschaft der Betonschraube um Kippachsen senkrecht zur Mittellängsachse des Schraubenschafts um einen kleinen Winkel, insbesondere um einen Winkel zwischen +10° und -10°, erleichtert, und auch im verkippten Zustand ist eine sichere Auflage der Lastplatte auf dem Auflageflansch sichergestellt.

In Weiterbildung der Erfindung sind die mittige Antriebsausbildung der Lastplatte und die Antriebsausbildung der Betonschraube so ausgebildet, dass bei Belastung der Lastplatte in Richtung auf das Gewinde des Schraubenschafts zu sich die Antriebsausbildung der Lastplatte und die Antriebsausbildung der Betonschraube zu einem spielfreien Zustand hin verklemmen.

Auf diese Weise kann bei Belastung der Lastplatte in Richtung auf ein Fundament zu, also in Richtung auf das Gewinde/Betongewinde der Betonschraube hin, eine spielfreie Verbindung von Lastplatte und Betonschraube erreicht werden. Dies kann beispielsweise durch eine leicht konische Ausbildung der mittigen Antriebsausbildung der Lastplatte und/oder der Antriebsausbildung der Betonschraube erreicht werden.

In Weiterbildung der Erfindung weist die Lastplatte eine äußere Antriebsausbildung an ihrem Außenumfang auf.

Beispielsweise sind am Außenumfang der Lastplatte abgerundete Vertiefungen zum Eingreifen von Fingern einer menschlichen Hand vorgesehen oder der Außenumfang der Lastplatte ist als Außensechskant zum Angreifen eines Schraubenschlüssels ausgebildet. Auf diese Weise kann die Lastplatte in einfacher Weise zusammen mit der Betonschraube verdreht werden, um das Betongewinde der Betonschraube ein Stück weit in das Fundament einzuschrauben oder ein Stück weit aus dem Fundament auszuschrauben, um eine Höhenlage der Lastplatte über dem Fundament auf den gewünschten Wert einzustellen.

In Weiterbildung der Erfindung ist die mittige Antriebsausbildung der Lastplatte als Innenmehrkant, insbesondere Innensechskant, Innenvielrund, insbesondere Torx-Antrieb oder AW-Antrieb, Innenvielzahn oder Innenstern und die Antriebsausbildung des Schraubenkopfs der Betonschraube als Außenmehrkant, insbesondere Außensechskant, Außenvielrund, insbesondere Torx-Antrieb, RW-Antrieb oder AW-Antrieb, Außenvielzahn oder Außenstern ausgebildet.

In Weiterbildung der Erfindung ist die Lastplatte aus Stahl, insbesondere nichtrostender Stahl oder verzinkter Stahl, aus Nichteisenmetallen, insbesondere Aluminium, aus Kunststoff oder aus Holzwerkstoff, insbesondere Kunstharzpressholz oder Furnierschichtholz oder dergleichen, ausgebildet.

Bei Ausbildung der Lastplatte aus Holzwerkstoff oder Kunststoff kann die Lastplatte beispielsweise einen Stahleinsatz aufweisen, der die mittige Antriebsausbildung der Lastplatte ausbildet.

In Weiterbildung der Erfindung ist der Schraubenschaft abschnittsweise von einem schlauchartigen Element aus elastisch und/oder plastisch deformierbarem Material, insbesondere Kunststoff oder Gummi, umgeben, um zwischen einem Fundament und einer Unterseite des Schraubenkopfs und/oder einer Unterseite der Lastplatte im montierten Zustand der Vorrichtung eine Abdichtung gegenüber aufsteigender Feuchtigkeit bereitzustellen.

Dadurch kann in sehr einfacher Weise verhindert werden, dass Feuchtigkeit von einer Oberfläche des Fundaments entlang dem Schraubenschaft der Betonschraube bis zu dem auf der Lastplatte aufliegenden Bauteil aufsteigt. Wenn die Betonschraube in eine Abdichtung eingesetzt ist, die auf dem Fundament aufliegt, kann die Verletzung dieser Abdichtung durch die Betonschraube mittels des schlauchartigen Elements abgedichtet werden. Das schlauchartige Element kann schlauchförmig oder auch nicht zylindrisch, beispielsweise in Form eines Faltenbalgs oder einer Dichtungsanordnung ausgebildet sein. Zur Abdichtung gegen aufsteigende Feuchtigkeit in der Fläche oder gegen das Gewindeelement kann auch eine Dichtfolie oder Dichtschicht, insbesondere aus EPDM, Gummi, TPU oder aus anderen modifizierten Kunststoffen, auf der Lastplatte angeordnet sein. Die Dichtfolie oder Dichtschicht kann einseitig oder zweiseitig selbstklebend ausgebildet sein.

In Weiterbildung der Erfindung ist die Lastplatte auf ihrer Oberseite mit reibungserhöhenden Elementen, insbesondere Vorsprüngen, versehen.

Beispielsweise sind auf der Oberseite der Lastplatte Spitzen vorgesehen, die in eine Unterseite eines auf der Lastplatte aufliegenden Bauteils eindringen. Auf diese Weise kann eine relative Verschiebung des Bauteils zur Lastplatte verhindert werden, sobald das Bauteil auf der Lastplatte aufliegt.

In Weiterbildung der Erfindung ist die Lastscheibe auf ihrer Oberseite mit einer Abdichtung, insbesondere einer Dichtfolie oder Dichtscheibe, versehen.

Auf diese Weise kann verhindert werden, dass Wasser sich kapillar entlang der Lastplatte ausbreitet und gegebenenfalls kapillar in das Bauteil aufsteigt. Die Dichtfolie oder Dichtscheibe kann in eine flächige Abdichtung an einer Unterseite des Bauteils eingebunden sein oder an diese anschließen. Die Dichtfolie oder Dichtscheibe sorgt für eine Abdichtung gegen Durchdringung durch Bohrungen für die Befestigungselemente oder entlang der Befestigungselemente. Die Dichtfolie oder Dichtscheibe kann aus EPDM, Gummi, TPU oder anderen modifizierten Kunststoffen bestehen und einseitig oder beidseitig selbstklebend ausgebildet sein.

In Weiterbildung der Erfindung ist ein Positionierkonus vorgesehen, der auf einer Oberseite der Lastplatte angeordnet ist, wobei die Oberseite der Lastplatte zum Aufliegen eines Bauteils vorgesehen ist und wobei sich der Positionierkonus in einer Richtung von der Oberseite der Lastplatte weg verjüngt.

Durch Vorsehen eines Positionierkonus auf der Oberseite der Lastplatte kann gleichzeitig mit dem Aufsetzen eines Bauteils auf die Lastplatte eine Ausrichtung der Lastplatte parallel zu einer Oberseite der Lastplatte vorgenommen werden. Hierzu muss in dem Bauteil eine kegelstumpfförmige Ausnehmung vorgesehen sein, in die der Positionierkonus eingreifen kann und die auf die Außenabmessungen des Positionierkonus abgestimmt ist. Beim Aufsetzen des Bauteils auf die Lastplatte richtet sich das Bauteil dadurch automatisch in Richtungen parallel zur Oberseite der Lastplatte aus, wenn die Umfangswand des Positionierkonus an die Innenwand der kegelstumpfförmigen Ausnehmung im Bauteil stößt. Mit dem Aufsetzen auf die Lastplatte kann das Bauteil somit automatisch in z-Richtung, also in Höhenrichtung, sowie auch in x- und y-Richtung, also parallel zur Oberseite der Lastplatte, ausgerichtet werden.

In Weiterbildung der Erfindung ist das Befestigungsmittel zum Fixieren eines auf der Lastplatte aufliegenden Bauteils konzentrisch zu einer Mittellängsachse des Positionierkonus angeordnet.

Mit dem Befestigungsmittel kann dadurch, falls erforderlich, die kegelstumpfförmige Ausnehmung im Bauteil in Richtung auf den Positionierkonus zu gedrückt oder vorgespannt werden, um gegebenenfalls das Bauteil in die exakt vorgesehene Position zu bewegen. Beispielsweise ist in dem Bauteil eine kegelstumpfförmige Ausnehmung vorgesehen, die von der Unterseite des Bauteils zur Oberseite ihre Fortsetzung in einer zylindrischen Bohrung findet. Beim Aufsetzen des Bauteils auf die Lastplatte wird zunächst das Befestigungsmittel in die kegelstumpfförmige Ausnehmung und dann in die zylindrische Bohrung eingeschoben. Von einer Oberseite des Bauteils her kann dann das Befestigungsmittel angezogen und das Bauteil gegen die Lastplatte gedrückt werden. Wie bereits erläutert wurde, erfolgt durch den Positionierkonus auf der Lastplatte und die kegelstumpfförmige Ausnehmung in dem Bauteil dadurch eine automatische Ausrichtung des Bauteils relativ zu einer Oberseite der Lastplatte. Sobald die Unterseite des Bauteils auf der Lastplatte aufliegt, kann diese Position mit dem Befestigungsmittel fixiert werden.

Die der Erfindung zugrunde liegende Aufgabe wird auch durch eine Anordnung mit wenigstens zwei erfindungsgemäßen Vorrichtungen, einem Bauteil und einem Fundament gelöst, wobei das Bauteil mit seiner Unterseite auf Oberseiten der wenigstens zwei Lastplatten der Vorrichtungen aufliegt und wobei die Betonschrauben der Vorrichtungen in das Fundament eingreifen.

In Weiterbildung der Erfindung ist bei der erfindungsgemäßen Anordnung auf wenigstens einer der Lastplatten ein Positionierkonus vorgesehen, wobei das Bauteil ausgehend von seiner Unterseite mit wenigstens einer kegelstumpfförmigen Ausnehmung versehen ist und wobei der Positionierkonus in der kegelstumpfförmigen Ausnehmung aufgenommen ist.

Mit der erfindungsgemäßen Anordnung lässt sich dadurch eine Positionierung des Bauteils nicht nur in z-Richtung, also in Höhenrichtung, sondern auch in x- und y-Richtung, also parallel zur Oberseite der Lastplatte erreichen. Das Ausrichten des Bauteils in allen drei Achsenrichtungen erfolgt dabei automatisch beim Aufsetzen des Bauteils auf die Lastplatte. Die Ausrichtung in z-Richtung wird durch das Aufliegen der Unterseite des Bauteils auf der Oberseite der Lastplatte definiert. Die Ausrichtung in x- und y-Richtung wird durch das Zusammenwirken des Positionierkonus mit der kegelstumpfförmigen Ausnehmung in der Unterseite des Bauteils erreicht. Beim Aufsetzen wirkt die Außenwand des Positionierkonus mit der Wand der kegelstumpfförmigen Ausnehmung zusammen und bewegt dadurch das Bauteil automatisch in die vorgesehene Position, in der die Außenwand des Positionierkonus an der Innenwand der kegelstumpfförmigen Ausnehmung über den gesamten Umfang oder wenigstens über den Großteil des Umfangs anliegt.

Bei einem Verfahren zum Ausrichten eines Bauteils auf einem Fundament unter Verwendung von wenigstens zwei erfindungsgemäßen Vorrichtungen sind folgende Schritte vorgesehen : Anordnen von wenigstens zwei Betonschrauben der Vorrichtungen in einem Fundament, so dass das Gewinde der Betonschraube wenigstens abschnittsweise in das Fundament eingreift, Nivellieren der Oberseiten der Lastplatten auf ein gemeinsames Niveau oder vordefinierte Niveaus mittels Drehen der Lastplatte gemeinsam mit der Betonschraube und/oder Drehen der Betonschraube und anschließendes Auflegen der Lastplatte, Auflegen des Bauteils auf die Oberseiten der Lastplatten und Fixieren des Bauteils relativ zu den Lastplatten mittels Anbringen der Befestigungsmittel im Bereich der Schraubenköpfe der Betonschrauben.

Durch das Verfahren kann ein Bauteil sehr schnell und einfach auf einem Fundament ausgerichtet werden. Nach dem Eindrehen der Betonschrauben werden die Lastplatten durch gemeinsames Drehen von Lastplatten und Betonschrauben auf ein gemeinsames vordefiniertes Niveau oder auf unterschiedliche, vordefinierte Niveaus gebracht. Alternativ können auch die Betonschrauben in das Fundament ein- oder ausgeschraubt werden, bis ein Auflageflansch der Betonschrauben auf einem gewünschten Niveau angeordnet ist, und erst anschließend werden die Lastplatten aufgesetzt. Die Oberseiten der Lastplatten bieten dadurch gemeinsam eine Auflagefläche für das Bauteil, das somit nach dem Aufsetzen bereits in der vorgesehenen Lage ausgerichtet ist. Nach dem Aufsetzen des Bauteils auf die Lastplatten der erfindungsgemäßen Vorrichtungen kann ein Zwischenraum zwischen einer Unterseite des Bauteils und einer Oberseite des Fundaments beispielsweise ausgestopft werden, gegebenenfalls mit Mörtel. Nach dem Verfestigen des Mörtels übernehmen die erfindungsgemäßen Vorrichtungen dann in Gravitationsrichtung keine statischen Aufgaben mehr. Zusätzlich kann das Bauteil mittels der Befestigungsmittel an der Betonschraube fixiert werden, so dass auch vom Fundament weg wirkende Kräfte auf das Bauteil mittels der erfindungsgemäßen Vorrichtungen in das Fundament übertragen werden können. Gegebenenfalls können die Vorrichtungen auch so ausgebildet sein, dass auch parallel zur Oberfläche des Fundaments wirkende Kräfte von dem Bauteil in das Fundament übertragen werden können. Beispielsweise kann sowohl die Schwelle als auch, was bevorzugt ist, der Ständer mit der Betonschraube verbunden werden, beispielsweise mit Hilfe von Zugankern, Winkeln, Blechen oder dergleichen. Die erfindungsgemäßen Vorrichtungen sichern infolgedessen gegen Sog, also gegen Kräfte entgegen der Gravitationsrichtung, und in Teilen auch gegen Schub, also gegen Kräfte quer zur Gravitationsrichtung. Sowohl die Betonschraube selbst als auch der Positionierkonus können Scherkräfte infolge einer Horizontalbeanspruchung, beispielsweise durch Wind, aufnehmen.

Das Verfahren erlaubt das automatische Ausrichten des Bauteils beim Aufsetzen auf die erfindungsgemäße Vorrichtung in allen drei Achsenrichtungen. Eine Ausrichtung in z-Richtung, also in Höhenrichtung, erfolgt durch das Aufliegen der Unterseite des Bauteils auf der Oberseite der Lastplatte. Das Ausrichten in x- und y-Richtung, also parallel zu einer Oberseite der Lastplatte, erfolgt durch das Zusammenwirken des Positionierkonus mit der kegelstumpfförmigen Ausnehmung in der Unterseite des Bauteils. Beim Aufsetzen eines Bauteils auf die Lastplatte liegt dann, wenn der Positionierkonus nicht exakt konzentrisch in die kegelstumpfförmige Ausnehmung in dem Bauteil eingeschoben wird, die Umfangswand des Positionierkonus zunächst nur einseitig an der Innenwand der kegelstumpfförmigen Ausnehmung an. Wird das Bauteil dann weiter in Richtung auf die Lastplatte bewegt, wird das Bauteil automatisch relativ zur Lastplatte seitlich verschoben, bis die Umfangswand des Positionierkonus flächig oder wenigstens über den Großteil ihres Umfangs an der Innenwand der kegelstumpfförmigen Ausnehmung im Bauteil anliegt. In sehr einfacher Weise kann dadurch das Bauteil relativ zu der erfindungsgemäßen Vorrichtung ausgerichtet werden.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, dargestellten und beschriebenen Ausführungsformen können dabei in beliebiger Weise miteinander kombiniert werden, ohne den Rahmen der Erfindung zu überschreiten. Dies gilt auch für die Kombination von Einzelmerkmalen ohne weitere Einzelmerkmale, mit denen sie im Zusammenhang dargestellt und/oder beschrieben sind. In den Zeichnungen zeigen:
- Fig. 1: eine Ansicht einer erfindungsgemäßen Vorrichtung gemäß einer ersten Ausführungsform von schräg oben,
- Fig. 2: die Vorrichtung der Fig. 1 in auseinandergezogenem Zustand,
- Fig. 3: die Vorrichtung der Fig. 1 und 2 in einem teilweise montierten Zustand,
- Fig. 4: eine erfindungsgemäße Vorrichtung gemäß einer zweiten Ausführungsform der Erfindung im auseinandergezogenen Zustand,
- Fig. 5: eine erfindungsgemäße Vorrichtung gemäß einer dritten Ausführungsform der Erfindung im auseinandergezogenen Zustand,
- Fig. 6: eine teilweise geschnittene, abschnittsweise Seitenansicht einer erfindungsgemäßen Anordnung,
- Fig. 7: die Anordnung der Fig. 6 von schräg oben,
- Fig. 8: eine abschnittsweise Darstellung der Vorrichtung der Fig. 5 in vergrößertem Maßstab,
- Fig. 9: drei schematische, abschnittsweise Ansichten einer erfindungsgemäßen Anordnung in drei unterschiedlichen Zuständen,
- Fig. 10: eine schematische Darstellung einer erfindungsgemäßen Anordnung,
- Fig. 11: eine Betonschraube für eine erfindungsgemäße Vorrichtung gemäß einer vierten Ausführungsform,
- Fig. 12: die Betonschraube der Fig. 11 in einem eingebauten ersten Zustand,
- Fig. 13: die Betonschraube der Fig. 11 in einem zweiten eingebauten Zustand,
- Fig. 14: eine abschnittsweise, teilweise geschnittene Ansicht von schräg oben einer weiteren erfindungsgemäßen Anordnung,
- Fig. 15: eine weitere erfindungsgemäße Vorrichtung, die im Wesentlichen der Vorrichtung 10 der Fig. 1 entspricht,
- Fig. 16: eine erfindungsgemäße Vorrichtung gemäß einer weiteren Ausführungsform der Erfindung,
- Fig. 17: eine abschnittsweise schematische Schnittansicht der Vorrichtung der Fig. 16,
- Fig. 18: eine alternative Ausführungsform eines Positionierkonus für die Vorrichtung der Fig. 16 und 17,
- Fig. 19: eine abschnittsweise schematische Schnittansicht eines Bauteils zum Aufsetzen auf die Vorrichtung der Fig. 16 und 17,
- Fig. 20: mehrere Ansichten des Positionierkonus der Vorrichtung der Fig. 17,
- Fig. 21: mehrere aufeinanderfolgende Schritte beim Aufsetzen eines Bauteils auf die Vorrichtung der Fig. 17,
- Fig. 22: schematische Skizzen zur Verdeutlichung der Ausrichtfunktion der Vorrichtung der Fig. 17,
- Fig. 23: mehrere Darstellungen zur Verdeutlichung der Verwendung der erfindungsgemäßen Vorrichtung,
- Fig. 24: ein vorbereitetes Fundament mit einer erfindungsgemäßen Vorrichtung gemäß Fig. 17 vor dem Aufsetzen eines Bauteils,
- Fig. 25: die Anordnung der Fig. 24 bei aufgesetztem Bauteil,
- Fig. 26: eine auseinandergezogene Darstellung einer weiteren erfindungsgemäßen Vorrichtung,
- Fig. 27: eine auseinandergezogene Darstellung der Vorrichtung der Fig. 16,
- Fig. 28: eine teilweise geschnitten Ansicht einer weiteren erfindungsgemäßen Anordnung und
- Fig. 29: eine weitere erfindungsgemäße Vorrichtung in zwei unterschiedlichen Zuständen.

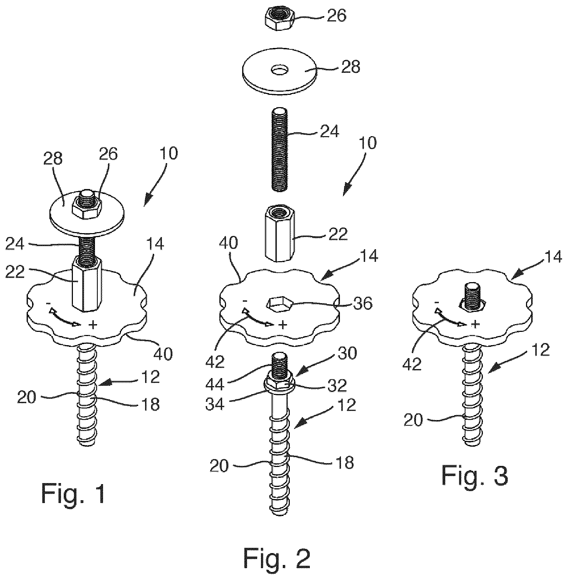

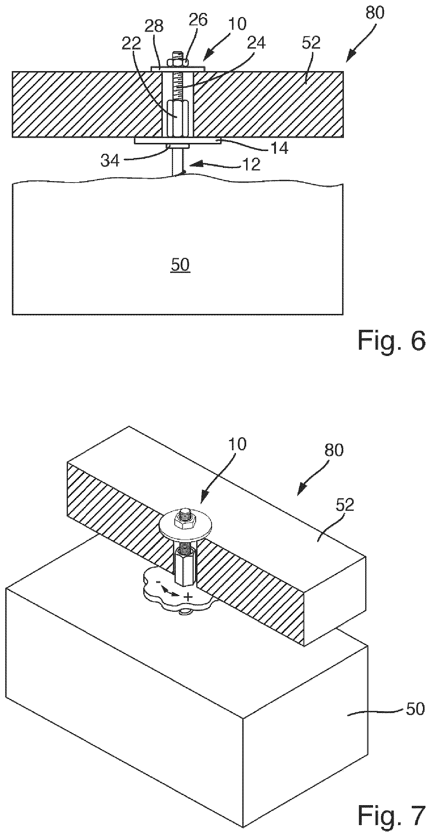

Fig. 1 zeigt eine erfindungsgemäße Vorrichtung 10 in einer Ansicht von schräg oben. Die Vorrichtung 10 weist eine in Fig. 1 lediglich abschnittsweise erkennbare Betonschraube 12 und eine auf den Schraubenkopf der Betonschraube 12 aufgesetzte Lastplatte 14 auf. Die Betonschraube 12 weist einen Schraubenschaft 18 auf, der mit einem Betongewinde 20 versehen ist. Im montierten Zustand, vgl. Fig. 6 und Fig. 7, greift das Betongewinde 20 der Betonschraube 12 in ein Fundament ein und die Lastplatte 14 ist oberhalb der Oberseite eines Fundaments angeordnet und bietet eine Auflagefläche für ein auszurichtendes Bauteil.

Bei der dargestellten Ausführungsform ist eine Gewindemuffe 22 vorgesehen, die auf einen vom Schraubenkopf der Betonschraube 12 ausgehenden Gewindezapfen aufgeschraubt ist, siehe Fig. 2. Die Gewindemuffe 22 kann auch als Distanzmuffe bezeichnet werden und kann am Außenumfang sechskantförmig, also als sechseckiges Prisma, oder auch kreisrund, also als Kreiszylinder, ausgebildet sein. In die Gewindemuffe 22 ist gegenüberliegend der Betonschraube 12 eine Gewindestange 24 eingeschraubt, auf die dann eine Mutter 26 aufgeschraubt ist. Zwischen der Mutter 26 und der Gewindemuffe 22 ist eine Beilagscheibe 28 angeordnet. Im montierten Zustand der Vorrichtung 10, siehe die Fig. 6 und 7, wird ein Bauteil, das auf der Oberseite der Lastplatte 14 aufliegt, mittels der Mutter 26 und der Beilagscheibe 28 gegen die Lastplatte 14 vorgespannt und dadurch an der Lastplatte 14 fixiert. Auf das Bauteil in Richtung vom Fundament weg wirkende Kräfte, beispielsweise Windsogkräfte, können dadurch mittels der Vorrichtung 12 in das Fundament übertragen werden.

Fig. 2 zeigt die Vorrichtung 10 im auseinandergezogenen Zustand. Die Betonschraube 12 ist am Schraubenschaft 18 mit dem Betongewinde 20 versehen, wobei sich das Betongewinde 20 bis zu einem in Fig. 2 unteren, freien Ende des Schraubenschafts 18 erstreckt. In Fig. 2 ist der Schraubenkopf 30 der Betonschraube 12 zu erkennen, der mit einer Antriebsausbildung 32 in Form eines Außensechskants versehen ist. Zwischen der Antriebsausbildung 32 und dem Betongewinde 20 am Schraubenschaft 18 ist ein Auflageflansch 34 für die Lastplatte 14 vorgesehen.

Die Lastplatte 14 ist als flache Scheibe ausgebildet und weist eine mittige Antriebsausbildung 36 auf. Die Antriebsausbildung 36 ist in Form einer Durchgangsöffnung mit einer Wandung in Form eines regelmäßigen sechseckigen Prismas ausgebildet. Die mittige Antriebsausbildung 36 ist so auf die Antriebsausbildung 32 der Betonschraube 12 abgestimmt, dass die Antriebsausbildung 36 auf die Antriebsausbildung 32 aufgeschoben werden kann, bis eine Unterseite der Lastplatte abschnittsweise auf dem Auflageflansch 34 aufliegt, siehe Fig. 3. Die mittige Antriebsausbildung 36 ist darüber hinaus so ausgebildet, dass sie spielbehaftet an der Antriebsausbildung 32 der Betonschraube 12 angreift. Dies wird in einfacher Weise dadurch erreicht, dass der Innensechskant der Antriebsausbildung 36 der Lastscheibe 14 einen geringfügig größeren Durchmesser aufweist als der Außensechskant der Antriebsausbildung 32 der Betonschraube 12. Die Lastscheibe 14 kann in einem Zustand der Fig. 3, in dem die Lastscheibe 14 auf dem Auflageflansch 34 der Betonschraube 12 aufliegt, dadurch geringfügig relativ zum Schraubenschaft 18 der Betonschraube 12 verkippt werden, beispielsweise um einen Winkel von +10° bis -10°. Das Spiel zwischen der mittigen Antriebsausbildung 36 und der Antriebsausbildung 32 ist aber nicht so groß, dass sich die Lastplatte 14 relativ zur Betonschraube 12 verdrehen ließe. Vielmehr ist eine sichere Drehmomentübertragung von der Lastscheibe 14 auf die Betonschraube 12 möglich. Auch im montierten Zustand, wenn das Betongewinde 20 der Betonschraube 12 in ein Fundament eingreift, siehe Fig. 6 und Fig. 7, kann durch Drehen der Lastplatte 14 die Betonschraube 12 in das Fundament eingeschraubt oder aus dem Fundament ausgeschraubt werden, um eine gewünschte Höhenposition bzw. ein gewünschtes Niveau der Oberseite der Lastplatte 14 relativ zum Fundament einstellen zu können.

Die Lastplatte 14 ist an ihrem Außenumfang, der grundsätzlich kreisscheibenförmig ausgebildet ist, mit gleichmäßig voneinander beabstandeten abgerundeten Vertiefungen 40 versehen. Diese Vertiefungen dienen zum Eingreifen der Finger einer menschlichen Hand und erleichtern das Drehen der Lastscheibe 14 zusammen mit der Betonschraube 12, wenn das Betongewinde 20 der Betonschraube 12 in ein Fundament eingreift.

Auf der Oberseite der Lastplatte ist ein gekrümmter Doppelpfeil 42 angedeutet. Im aufgesetzten Zustand der Lastplatte 14, siehe Fig. 3, führt eine Drehung der Lastplatte 14 gegen den Uhrzeigersinn, in Fig. 3 also in Richtung des rechten Pfeilendes des Doppelpfeils 42, zu einem Ausschrauben des Betongewindes 20 der Betonschraube 12 aus einem Fundament und damit zu einer Vergrößerung des Abstands zwischen der Lastplatte 14 und einem Fundament. Vor dem in Fig. 3 rechten Ende des gekrümmten Doppelpfeils 42 ist daher ein Plussymbol angeordnet.

Wird dahingegen die Lastplatte 14 in Richtung des linken Endes des Doppelpfeils 42 gedreht, in Fig. 3 also im Uhrzeigersinn, wird das Betongewinde 20 in ein Fundament eingeschraubt und ein Abstand zwischen der Lastplatte 14 und einer Oberseite des Fundaments verringert sich. Aus diesem Grund ist vor dem in Fig. 3 linken Ende des Doppelpfeils 42 ein Minuszeichen angeordnet.

Beim Montieren der erfindungsgemäßen Vorrichtung 10 wird zunächst die Betonschraube 12 in eine vorbereitete Bohrung in einem Fundament eingeschraubt oder das Betongewinde 20 der Betonschraube 12 wird in einen noch flüssigen Werkstoff eines Fundaments eingebracht. Das Betongewinde 20 der Betonschraube 12 greift nun in das Fundament ein. Auf diese Weise werden mehrere Betonschrauben 12 in das Fundament eingebracht, beispielsweise entlang einer geraden Linie, die die Mittellinie einer auf das Fundament aufzusetzenden Wandscheibe oder eines aufzusetzenden Schwellholzes markiert. Die Auflageflansche 34 der Betonschrauben 12 oder die Oberseiten der Lastplatten 14 nach dem Aufsetzen der Lastplatten 14 auf die Betonschrauben 12 werden dann auf ein gemeinsames Niveau oder auf jeweils vordefinierte Niveaus gebracht. Hierzu werden die Betonschrauben 12 durch Drehung des Schraubenkopfs 30 der Betonschrauben oder Drehung der Lastplatten 14 entweder ein Stück weit in das Fundament eingeschraubt oder ein Stück weit aus dem Fundament ausgeschraubt. Zweckmäßigerweise wird eine Bohrung im Fundament so ausgeführt und/oder die Betonschrauben werden nach dem Setzen in das Fundament zunächst ein Stück ausgeschraubt, so dass sowohl ein Einschrauben als auch ein Ausschrauben der Betonschraube mittels Drehung der Lastplatte 14 möglich ist. Nach dem Ausrichten der Lastscheiben 14 auf ein gemeinsames Niveau kann dann ein Bauteil, beispielsweise ein Schwellholz oder eine Wandscheibe, auf die Lastplatten 14 aufgesetzt werden. Dies erfolgt so, dass ein Gewindezapfen 44 am Schraubenkopf 30 der Betonschraube 12 sich in eine Durchgangsöffnung des Bauteils hineinerstreckt, vgl. Fig. 6 und Fig. 7. Zuvor oder anschließend wird die Gewindemuffe 22 auf den Gewindezapfen 44 aufgeschraubt und die Gewindestange 24 wird in die Oberseite der Gewindemuffe 22 eingeschraubt. Die Beilagscheibe wird, siehe Fig. 6 und Fig. 7, dann so angeordnet, dass sie auf einer Oberseite des Bauteils aufliegt. Nach Festziehen der Mutter 26 ist das Bauteil dann zwischen der Oberseite der Lastplatte 14 und der Unterseite der Beilagscheibe 28 eingespannt.

Mit der erfindungsgemäßen Vorrichtung 10 kann dadurch ein Bauteil zum einen relativ zu einem Fundament ausgerichtet werden und zum anderen kann das Bauteil am Fundament gegenüber Zugkräften von Fundament weg gesichert werden.

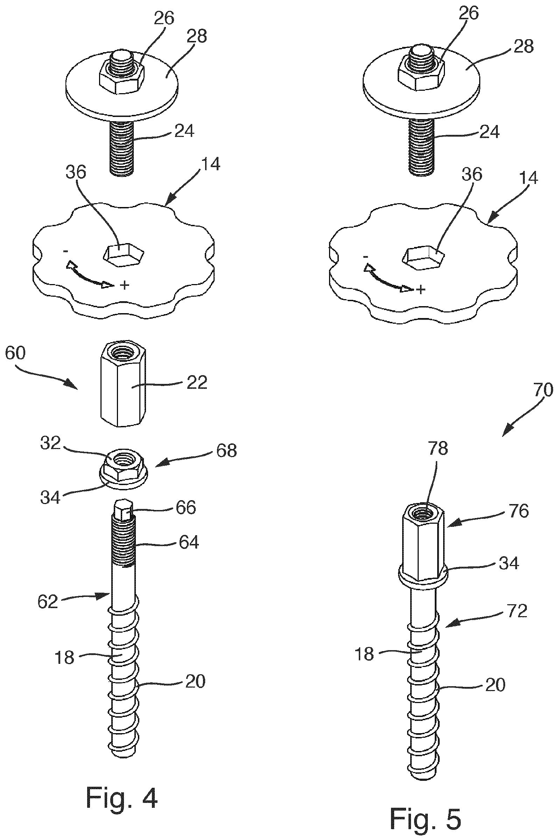

Fig. 4 zeigt eine erfindungsgemäße Vorrichtung 60 gemäß einer zweiten Ausführungsform der Erfindung. Die Vorrichtung 60 ist in zahlreichen Komponenten identisch zur Vorrichtung 10 der Fig. 1 bis 3 ausgebildet, so dass lediglich die Unterschiede zur Vorrichtung 10 erläutert werden.

Eine Betonschraube 62 der Vorrichtung 60 ist als Stockschraube ausgebildet und weist auf ihrem Schraubenschaft 18 neben dem Betongewinde 20 noch ein Befestigungsgewinde 64, beispielsweise ein metrisches Gewinde, auf. Ein Schraubenkopf 66 der Betonschraube 62 ist mit einer Antriebsausbildung in Form eines Außensechskants versehen. Ein Außendurchmesser des Schraubenkopfs 66 ist kleiner als ein Außendurchmesser des Befestigungsgewindes 64.

Auf das Befestigungsgewinde 64 wird eine Auflagemutter 68 aufgeschraubt. Die Auflagemutter 68 weist die Form des Schraubenkopfs 30 der Betonschraube 12 auf und ist infolgedessen mit der Antriebsausbildung 32 in Form eines Außensechskants und mit dem Auflageflansch 34 für die Lastplatte 14 versehen. Nach dem Aufschrauben der Auflagemutter 68 ist zwischen dem Schraubenkopf 66 und der Oberseite der Auflagemutter 68 noch ein Stück des Befestigungsgewindes 64 zugänglich. Auf diesen Abschnitt des Befestigungsgewindes 64 wird dann die Gewindemuffe 22 aufgeschraubt. Die Lastplatte 14 wird mit ihrer mittigen Antriebsausbildung 36 auf die Auflagemutter 68 aufgeschoben, bis eine Unterseite der Lastplatte 14 auf dem Auflageflansch 34 aufliegt. Die Gewindestange 24 kann in die Gewindemuffe 22 eingeschraubt werden. Die Beilagscheibe 28 wird auf die Gewindestange 24 aufgeschoben und die Mutter 26 wird auf die Gewindestange 24 aufgeschraubt.

Mit der erfindungsgemäßen Vorrichtung 60 kann dadurch ein Bauteil zum einen relativ zu einem Fundament ausgerichtet werden und zum anderen kann das Bauteil am Fundament gegenüber Zugkräften von Fundament weg gesichert werden. Der Höhenausgleich kann auch über eine Drehung der Auflagemutter 68 erfolgen, ohne dass die Betonschraube 62 selbst gedreht werden muss.

Fig. 5 zeigt eine erfindungsgemäße Vorrichtung 70 gemäß einer dritten Ausführungsform der Erfindung. Die Vorrichtung 70 ist in etlichen Teilen identisch zur Vorrichtung 10 der Fig. 1 bis 3, so dass lediglich die zur Vorrichtung 10 unterschiedlichen Bauteile erläutert werden.

Die Betonschraube 72 der Vorrichtung 70 weist den Schraubenschaft 18 mit dem Betongewinde 20 auf. Ein Schraubenkopf 76 der Betonschraube 72 weist eine Antriebsausbildung in Form eines Außensechskants auf, wobei die Antriebsausbildung deutlich länger ausgebildet ist als die Antriebsausbildung 32 des Schraubenkopfs 30 der Betonschraube 12. Die Antriebsausbildung am Schraubenkopf 76 der Betonschraube 72 ist so lang ausgebildet wie die Gewindemuffe 22. Zwischen dem in Fig. 5 unteren Ende der Antriebsausbildung und einem gewindefreien Abschnitt zwischen dem Schraubenkopf 76 und dem Betongewinde 20 ist ein Auflageflansch 34 ausgebildet. Der Auflageflansch 34 ist einstückig mit dem Schraubenkopf 76 und dem Schraubenschaft 18 der Betonschraube 72 ausgebildet.

Der Schraubenkopf 76 ist an seinem, dem Betongewinde 20 gegenüberliegenden Ende mit einer Innengewindebohrung 78 versehen. In diese Innengewindebohrung kann die Gewindestange 24 eingeschraubt werden.

Die Lastplatte 14 wird mit ihrer mittigen Antriebsausbildung 36 auf die Antriebsausbildung am Schraubenkopf 76 aufgeschoben, bis eine Unterseite der Lastplatte 14 auf dem Auflageflansch 34 aufliegt. Wie ausgeführt wurde, kann die Gewindestange 24 in die Gewindebohrung 78 im Schraubenkopf 76 eingeschraubt werden, die Beilagscheibe 28 kann auf die Gewindestange 24 aufgeschoben werden und die Mutter 26 kann auf die Gewindestange 24 aufgeschraubt werden.

Fig. 6 zeigt eine teilweise geschnittene Ansicht einer erfindungsgemäßen Anordnung 80. Die Anordnung 80 ist lediglich abschnittsweise dargestellt, da lediglich eine erfindungsgemäße Vorrichtung 10 vorgesehen ist.

Im montierten Zustand der Anordnung gemäß Fig. 6 ist die Betonschraube 12 in ein Fundament 50 eingeschraubt worden, wobei der Auflageflansch 34 der Betonschraube 12 ein Stück weit oberhalb der Oberseite des Fundaments 50 angeordnet ist. Die Lastplatte 14 liegt auf dem Auflageflansch 34 auf. Ein Bauteil 52, beispielsweise ein Schwellholz oder eine Wandscheibe, liegt auf der Oberseite der Lastplatte 14 auf. Die Gewindemuffe 22 ist auf den Schraubenkopf der Betonschraube 12 aufgeschraubt. Die Gewindestange 24 ist in die Oberseite der Gewindemuffe 22 eingeschraubt. Die Beilagscheibe 28 liegt auf einer Oberseite des Bauteils 52 auf. Die Mutter 26 ist auf die Gewindestange 24 aufgeschraubt und presst die Beilagscheibe 28 gegen die Oberseite des Bauteils 52. Das Bauteil 52 ist dadurch zwischen der Beilagscheibe 28 und der Oberseite der Lastplatte 14 fixiert. Auf das Bauteil 52 vom Fundament 50 weg wirkende Kräfte, in Fig. 6 beispielsweise nach oben, können dadurch über die Betonschraube 12 in das Fundament 50 eingeleitet werden.

Fig. 7 zeigt die Anordnung 80 der Fig. 6 in einer Ansicht von schräg oben.

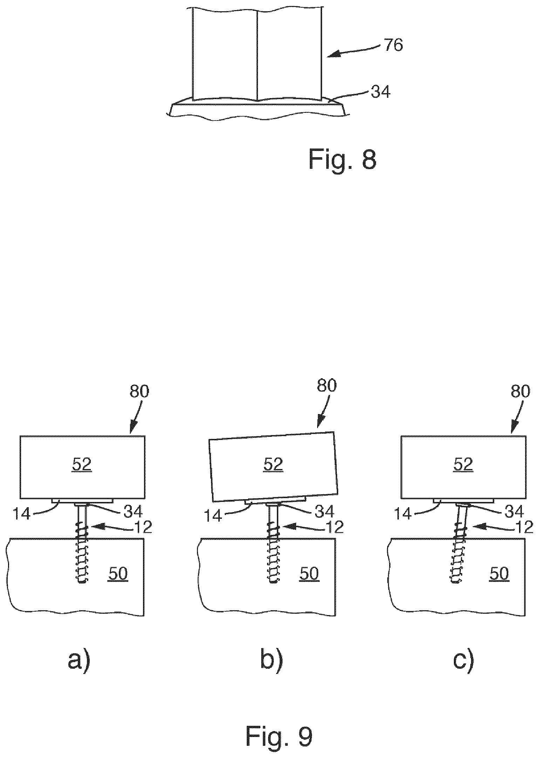

Fig. 8 zeigt abschnittsweise den Schraubenkopf 76 der Betonschraube 72 der Fig. 5. Zu erkennen ist die Antriebsausbildung in Form eines Außensechskants und der Auflageflansch 34. Der Auflageflansch 34 ist konvex abgerundet ausgebildet. Dadurch kann nach dem Aufsetzen der Lastplatte 14 auf den Auflageflansch 34 die Lastplatte um einen kleinen Winkel, insbesondere zwischen +10° und -10°, relativ zur Mittellängsachse der Betonschraube 72 verkippt werden. Wie bereits ausgeführt wurde, ist hierzu auch erforderlich, dass die mittige Antriebsausbildung 36 der Lastplatte 14 spielbehaftet an der Antriebsausbildung am Schraubenkopf 76 angreift. Dies gilt auch, wie bereits erläutert wurde, für den Auflageflansch 34 am Schraubenkopf 30 der Betonschraube 12 sowie den Auflageflansch 34 an der Auflagemutter 68 der Betonschraube 62.

Fig. 9 zeigt drei abschnittsweise Ansichten der erfindungsgemäßen Anordnung 80 in drei unterschiedlichen Zuständen. Im Zustand der Fig. 9a ist die Betonschraube 12 exakt vertikal in das Fundament 50 eingesetzt worden. Eine Unterseite des Bauteils 52 ist exakt horizontal und damit senkrecht zur Mittellängsachse des Schraubenschafts der Betonschraube 12 angeordnet. Die Lastplatte 14 ist senkrecht zur Mittellängsachse des Schraubenschafts der Betonschraube 12 angeordnet.

Im Zustand der Fig. 9b ist die Betonschraube 12 wie im Zustand der Fig. 9a exakt vertikal in das Fundament 50 eingebracht bzw. eingeschraubt worden. Eine Unterseite des Bauteils 52 ist aber nicht exakt horizontal ausgerichtet und somit auch nicht senkrecht zur Mittellängsachse des Schraubenschafts der Betonschraube 12 ausgerichtet. Eine Unterseite des Bauteils 52 liegt flächig auf der Oberseite der Lastplatte 14 auf. Die Lastplatte 14 ist in einem kleinen Winkel relativ zur Mittellängsachse des Schraubenschafts der Betonschraube 12 verkippt angeordnet und liegt auch in diesem Zustand sicher auf dem Auflageflansch 34 der Betonschraube 12 auf. Eine in Fig. 9b linke Seite der Lastplatte 14 ist tiefer angeordnet und infolgedessen näher am Fundament 50 als eine in Fig. 9b rechte Seite der Lastplatte 14.

Im Zustand der Fig. 9c ist die Betonschraube 12 schräg zur vertikalen Richtung in das Fundament 50 eingebracht worden, insbesondere eingeschraubt worden. Die Mittellängsachse des Schraubenschafts der Betonschraube 12 ist somit schräg zur Vertikalen angeordnet, in Fig. 9c nach rechts zur Vertikalen verkippt. Die Lastplatte 14 liegt auf dem Auflageflansch 34 der Betonschraube 12 auf. Eine Unterseite des Bauteils 52 liegt auf einer Oberseite der Lastplatte 14 auf. Eine Unterseite des Bauteils 52 ist exakt horizontal ausgerichtet. Auch die Lastplatte 14 ist, da das Bauteil 52 flächig auf der Oberseite der Lastplatte 14 aufliegt, exakt horizontal ausgerichtet. Die Lastplatte 14 liegt auf dem Auflageflansch 34 in einem leicht verkippten Zustand relativ zur Mittellängsachse des Schraubenschafts der Betonschraube 12 auf.

Anhand der Darstellungen der Fig. 9a, 9b und 9c ist zu erkennen, wie mit der erfindungsgemäßen Vorrichtung 10 Montagefehler, siehe Fig. 9c, durch das schräge Einbringen der Betonschraube 12 in das Fundament oder Bauteiltoleranzen, siehe Fig. 9b, durch die schräge Anordnung der Unterseite des Bauteils 52, kompensiert werden können.

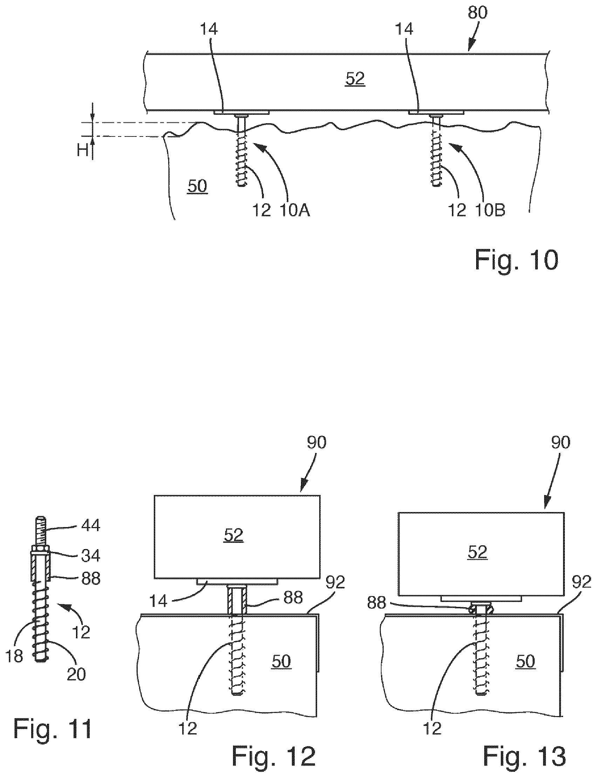

Fig. 10 zeigt eine abschnittsweise Anordnung der erfindungsgemäßen Anordnung 80 mit einer ersten erfindungsgemäßen Vorrichtung 10A und einer zweiten erfindungsgemäßen Vorrichtung 10B. Es ist in Fig. 10 zu erkennen, dass eine Oberseite des Fundaments 50 nicht eben ausgebildet ist, sondern zum einen unterschiedliche Niveaus aufweist und zum anderen uneben mit Erhöhungen und Vertiefungen ausgebildet ist. Die Betonschraube 12 der Vorrichtung 10A wurde an einer Stelle in das Fundament 50 eingeschraubt, die zu der Stelle, an der die Betonschraube 12 der Vorrichtung 10b eingeschraubt wurde, um die Höhendifferenz H höher liegt. Die Oberseite der Lastplatte 14 der Vorrichtung 10A ist jedoch auf gleicher Höhe wie die Oberseite der Lastplatte 14 der Vorrichtung 10B angeordnet. Dies kann nach dem Eindrehen der Betonschrauben 12 in das Fundament 50 dadurch eingestellt werden, dass die Lastplatte 14 zusammen mit der Betonschraube 12 gedreht wird und die Oberseiten der Lastplatten 14 auf ein gemeinsames Niveau eingestellt werden. Das Bauteil 52 liegt mit seiner Unterseite auf den Oberseiten der Lastplatten 14 auf und die Unterseite des Bauteils 52 ist exakt horizontal angeordnet.

Nach dem Aufsetzen des Bauteils 52 ist das Bauteil 52 somit korrekt ausgerichtet. Ein Zwischenraum zwischen einer Oberseite des Fundaments 50 und der Unterseite des Bauteils 52 kann dann ausgefüllt werden, beispielsweise mit Mörtel ausgestopft werden.

Fig. 11 zeigt die Betonschraube 12 der Fig. 1 bis 3, die mit einem elastisch und/oder plastisch verformbaren Element 90 versehen ist. Das Element 90 ist schlauchförmig ausgebildet und auf den Schraubenschaft 18 der Betonschraube 12 aufgeschoben. Das schlauchförmig Element 90 liegt mit seiner Oberseite an einer Unterseite des Auflageflansches 34 an und endet an seiner Unterseite kurz vor dem Beginn des Betongewindes 20.

Fig. 12 zeigt eine abschnittsweise Ansicht einer Anordnung 90 mit der Betonschraube 12 der Fig. 11 in einem ersten Zustand und Fig. 13 zeigt die Anordnung 90 in einem zweiten Zustand.

Das Fundament 50 der Anordnung 90 ist auf seiner Oberseite mit einer Abdichtschicht 92 versehen. An der Stelle, an der die Betonschraube 12 in das Fundament 50 eingeschraubt ist, ist die Abdichtschicht 92 unterbrochen. Um an dieser Stelle zu verhindern, dass Feuchtigkeit von der Oberseite der Abdichtschicht 92 oder aus dem Fundament 50 bis in das Bauteil 52 aufsteigt, ist das schlauchförmige Element 88 vorgesehen, das mit seiner Unterseite auf der Oberseite der Abdichtschicht 92 aufliegt.

Fig. 13 zeigt einen zweiten Zustand der Vorrichtung 90. Die Betonschraube 12 ist weiter in das Fundament 50 eingeschraubt als im Zustand der Fig. 12. Das schlauchförmige Element 88 wird plastisch und/oder elastisch deformiert und liegt auch im Zustand der Fig. 12, also im zusammengedrückten Zustand, noch auf der Oberseite der Abdichtschicht 92 und an der Unterseite des Auflageflansches 34 der Betonschraube 12 an. Auch im Zustand der Fig. 13 ist dadurch verhindert, dass Feuchtigkeit von der Oberseite der Abdichtschicht 92 bis in das Bauteil 52 aufsteigt.

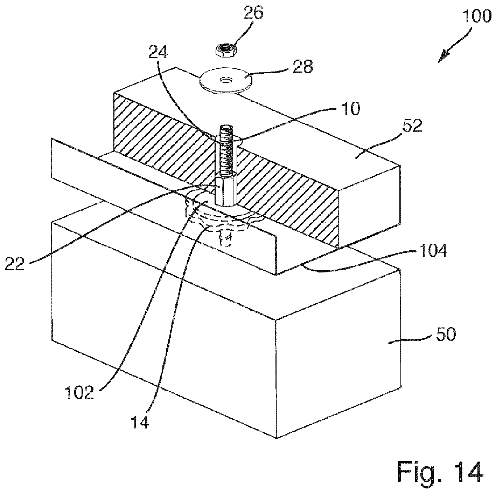

Fig. 14 zeigt eine erfindungsgemäße Anordnung 100 gemäß einer weiteren Ausführungsform der Erfindung in einer abschnittsweisen, teilweise geschnittenen Ansicht von schräg oben. Die Anordnung 100 unterscheidet sich von der Anordnung 80 der Fig. 6 und 7 lediglich in Einzelheiten. Nachfolgend werden hauptsächlich die Unterschiede zur Anordnung 80 der Fig. 6 und 7 beschrieben. Die Anordnung 100 weist eine erfindungsgemäße Vorrichtung 10 auf, wobei im Unterschied zur Vorrichtung 10 der Fig. 6 und 7 auf die Lastplatte 14 eine Dichtscheibe 102 aufgelegt ist. Die Dichtscheibe 102 ist ringförmig ausgebildet und umgibt die Gewindemuffe 22. Das Bauteil 52 ist als Schwelle oder als unterer Abschnitt eines im Übrigen nicht dargestellten Wandelements ausgebildet und an seiner Unterseite mit einer Dichtfolie 104 versehen. Die Dichtfolie 104 ist an den Seitenflächen des Bauteils 52 jeweils um 90° umgeschlagen und erstreckt sich ein Stück weit senkrecht nach oben entlang der Seitenflächen des Bauteils 52. Die Dichtfolie 104 ist dafür vorgesehen, das Bauteil 52 gegenüber dem Fundament 50 und vor allem gegenüber aufsteigender Feuchtigkeit, beispielsweise kapillar aufsteigendes Wasser, abzudichten. An der Stelle, an der die Gewindemuffe 22 der Vorrichtung 10 die Abdichtfolie 104 durchdringt, ist eine Durchgangsöffnung durch die Abdichtfolie 104 vorhanden. Um diese Durchgangsöffnung abzudichten, ist die Dichtscheibe 102 vorgesehen, die beispielsweise aus EPDM, Gummi, TPU oder anderen modifizierten Kunststoffen besteht und einseitig oder beidseitig selbstklebend ausgeführt sein kann. Die Dichtscheibe 102 dichtet die Durchgangsöffnung in der Abdichtfolie 104 und die Durchdringung für die Vorrichtung 10 im Bauteil 52 ab und verhindert dadurch zuverlässig, dass im Bereich der Vorrichtung 10 Feuchtigkeit vom Fundament 50 oder von einer Zwischenschicht zwischen Fundament 50 und Bauteil 52 in das Bauteil 52 aufsteigen kann. Die Dichtscheibe 102 liegt hierfür dicht an einem Außenumfang der Gewindemuffe an.

Die Beilagscheibe 28 ist auf ihrer Unterseite mit einer rauen Oberfläche versehen, so dass eine seitliche Verschiebung des Bauteils 52 relativ zur Vorrichtung 10 weitgehend vermieden ist. Die Mutter 26 wird auf die Gewindestange 24 aufgeschraubt und presst die Beilagscheibe 28 gegen die Oberfläche des Bauteils 52.

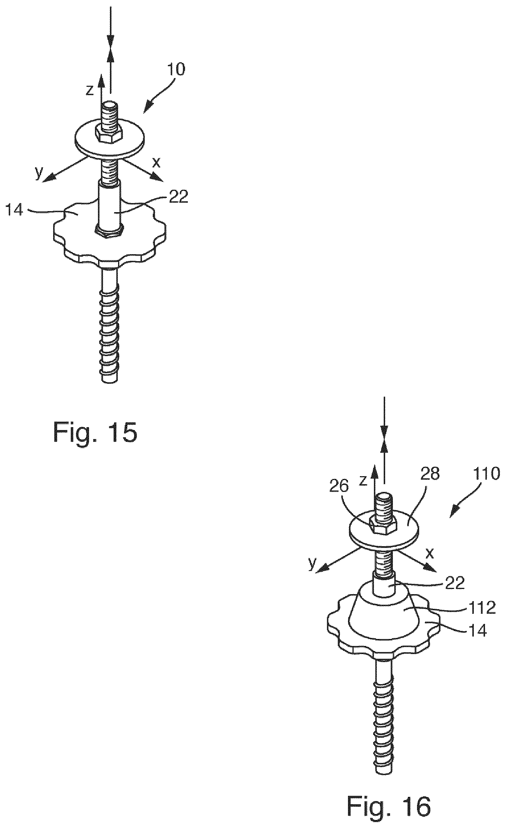

Fig. 15 zeigt eine erfindungsgemäße Vorrichtung 10, die weitgehend der Vorrichtung 10 der Fig. 1 entspricht. Im Unterschied zur Vorrichtung 10 der Fig. 1 ist die Gewindemuffe 22 oder Distanzmuffe mit einem kreiszylindrischen Außenumfang versehen. In Fig. 15 ist oberhalb der Vorrichtung 10 mit zwei aufeinander zu gerichteten Pfeilen angedeutet, dass die Vorrichtung 10 zum Ausrichten eines auf die Lastplatte 14 aufgesetzten Bauteils in z-Richtung geeignet ist. Wenn die Unterseite des Bauteils auf der Oberseite der Lastplatte 14 aufliegt, ist das Bauteil automatisch in z-Richtung ausgerichtet. Die Vorrichtung 10 kann also zum Justieren und Montieren eines Bauteils in z-Richtung eingesetzt werden. In y- und x-Richtung ist, nachdem die Vorrichtung 10 an einem Fundament oder dergleichen angeordnet ist, nur noch dahingehend eine Ausrichtung des Bauteils möglich, dass dieses in der exakt vorgesehenen Position auf der Lastplatte 14 angeordnet wird. Ein solches Ausrichten sowohl der Vorrichtung 10 als auch des Bauteils auf der Lastplatte 14 muss händisch erfolgen, beispielsweise dadurch, dass eine Durchgangsbohrung im Bauteil einen größeren Innendurchmesser aufweist als der Außendurchmesser der Gewindemuffe 22. Durch leichte Hammerschläge kann das auf der Lastplatte 14 aufliegende Bauteil dann auch in y- und x-Richtung ausgerichtet werden.

Fig. 16 zeigt eine weitere erfindungsgemäße Vorrichtung 110, die weitgehend der Vorrichtung der Fig. 15 entspricht. Auf der Lastplatte 14 ist zusätzlich ein Positionierkonus 112 angeordnet. Der Positionierkonus weist eine konzentrische Durchgangsbohrung auf und ist auf die Gewindemuffe 22 oder Distanzmuffe aufgeschoben, bis eine Unterseite des Positionierkonus 112 auf der Oberseite der Lastplatte 14 aufliegt. Der Positionierkonus 112 verjüngt sich in einer Richtung von der Oberseite der Lastplatte 14 weg. Der Positionierkonus kann beispielsweise aus Holz, Furnierschichtholz, Kunstharzpressholz, Kunststoff, faserverstärktem Kunststoff, Beton, Polymerbeton, Metall, insbesondere Aluminium, oder dergleichen bestehen. Die Gewindemuffe 22 oder Distanzmuffe kann im Rahmen der Erfindung dabei sowohl über die Oberseite des Positionierkonus 112 überstehen, bündig mit der Oberseite des Positionierkonus abschließen oder vertieft im Positionierkonus angeordnet sein.

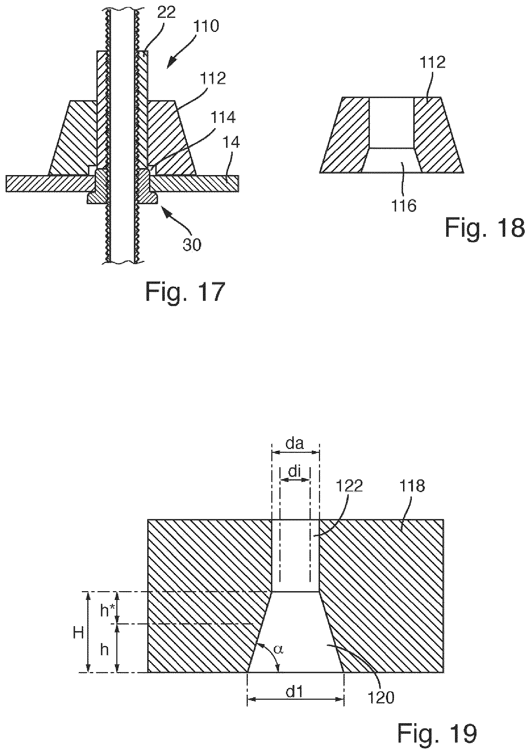

Eine Unterseite eines auf die Lastplatte 14 aufzusetzenden Bauteils ist, vgl. Fig. 19, mit einer kegelstumpfförmigen Ausnehmung versehen, die in Tiefe, Durchmesser und Kegelwinkel auf den Positionierkonus 112 abgestimmt ist. Zweckmäßigerweise entspricht der Kegelwinkel der kegelstumpfförmigen Ausnehmung dem Kegelwinkel des Positionierkonus 112 und die Innendurchmesser der kegelstumpfförmigen Ausnehmung sind so bemessen, dass der Positionierkonus 112 vollständig in der kegelstumpfförmigen Ausnehmung aufgenommen werden kann, aber nur ein sehr geringes Spiel zwischen der Außenwand des Positionierkonus 112 und der Innenwand der kegelstumpfförmigen Ausnehmung vorliegt.

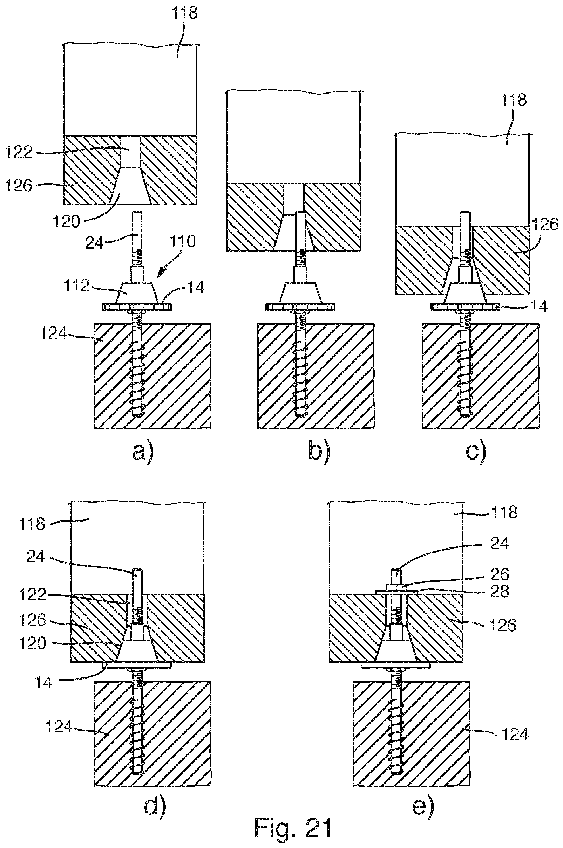

Beim Aufsetzen eines Bauteils auf die Vorrichtung 110 dringt infolgedessen der Positionierkonus 112 in die kegelstumpfförmige Ausnehmung in der Unterseite des Bauteils ein, so dass dadurch, vgl. Fig. 21, das Bauteil relativ zur Lastplatte 14 in x-Richtung und y-Richtung automatisch ausgerichtet wird.

Mit der erfindungsgemäßen Vorrichtung 110 kann ein auf die Lastplatte 14 aufgesetztes Bauteil damit automatisch in z-Richtung ausgerichtet werden. Hierzu ist oberhalb der Vorrichtung 110 wie in der Fig. 15 wieder durch zwei aufeinander zu gerichtete Doppelpfeile angedeutet, dass diese Ausrichtung automatisch dadurch erfolgt, dass die Unterseite des Bauteils auf der Oberseite der Lastplatte 14 aufliegt. Darüber hinaus wird durch den Positionierkonus 112 eine automatische Ausrichtung in x-Richtung und y-Richtung des Bauteils relativ zur Vorrichtung 110 beim Eindringen des Positionierkonus 112 in die kegelstumpfförmige Ausnehmung an der Unterseite des Bauteils bewirkt, vgl. Fig. 21. Mit der Befestigungsmutter 26 und der Unterlegscheibe 28 kann das Bauteil dann an der Vorrichtung 110 fixiert werden.

Fig. 17 zeigt eine schematische, abschnittsweise Schnittansicht der Vorrichtung 110 der Fig. 16. Es ist zu erkennen, dass der Positionierkonus 112 mit seiner Unterseite auf der Oberfläche der Lastplatte aufliegt. Die Gewindemuffe 22 erstreckt sich durch eine Durchgangsbohrung des Positionierkonus 112 hindurch. Ein Innendurchmesser der Durchgangsbohrung des Positionierkonus 112 ist geringfügig größer als ein Außendurchmesser der Gewindemuffe 122. Beim Aufschieben des Positionierkonus 112 auf die Gewindemuffe 22 wird der Positionierkonus 112 dadurch automatisch relativ zur Lastplatte 14 ausgerichtet.

Die Auflagemutter 30 ragt ein Stück weit über die Oberseite der Lastplatte 14 hinaus. An seiner Unterseite weist der Positionierkonus 112 aus diesem Grund eine Ausnehmung 114 auf, in die die Positioniermutter 30 mit ihrer Oberseite abschnittsweise hineinragt.

Fig. 18 zeigt eine weitere Ausführungsform des Positionierkonus 112. Ein unterer Abschnitt der Mittelbohrung des Positionierkonus 112 ist dabei kegelstumpfförmig ausgeführt, um, vgl. Fig. 17, den oberen Abschnitt der Positioniermutter 30 aufzunehmen.

Im Rahmen der Erfindung muss die Positioniermutter 30 nicht über die Oberseite der Lastplatte 14 hinausragen. Im Rahmen der Erfindung kann die Mittelbohrung des Positionierkonus 112 infolgedessen auch zylindrisch ausgebildet sein.

Im Rahmen der Erfindung muss der Positionierkonus 112 keine Mittelbohrung aufweisen. Der Positionierkonus 112 kann auch auf die Lastplatte 14 aufgesetzt und durch geeignete Befestigungsmittel an der Lastplatte 14 befestigt werden.

Fig. 19 zeigt eine abschnittsweise Darstellung eines Bauteils, beispielsweise eine untere Schwelle einer Holzwand 118, die mit einer kegelstumpfförmigen Ausnehmung 120 versehen ist, die von einer Unterseite der Holzwand 118 ausgeht. Die kegelstumpfförmige Ausnehmung 120 wird mittels einer zylindrischen Bohrung 122 fortgesetzt. Dadurch ist eine Durchgangsöffnung durch einen Abschnitt der Holzwand 118 bereitgestellt, beispielsweise eine Durchgangsöffnung durch die untere Schwelle der Holzwand 118.

Der Kegelwinkel α, der Anfangsdurchmesser d1 und der Enddurchmesser da der kegelstumpfförmigen Ausnehmung 120 sind auf den Kegelwinkel, den Eingangsdurchmesser und den Ausgangsdurchmesser des Positionierkonus 112 abgestimmt, so dass der Positionierkonus 112 vollständig in der kegelstumpfförmigen Ausnehmung 120 aufgenommen werden kann, aber nur ein geringes Spiel zwischen der Außenwand des Positionierkonus 112 und der Innenwand der kegelstumpfförmigen Ausnehmung 120 vorliegt. Dadurch kann beim Aufschieben der Holzwand 118 auf die Vorrichtung 110, mit anderen Worten beim Aufschieben der kegelstumpfförmigen Ausnehmung 120 auf den Positionierkonus 112, das Bauteil, also die Holzwand 118, automatisch relativ zu der Vorrichtung 110 ausgerichtet werden. Diese Ausrichtung erfolgt dabei in z-Richtung, nämlich dadurch, dass die Unterseite der Holzwand 118 abschnittsweise auf der Oberseite der Lastplatte 14 zu liegen kommt, und in x-Richtung und y-Richtung dadurch, dass durch die aufeinander auflaufende kegelstumpfförmige Außenwand des Positionierkonus 112 und der ebenfalls kegelstumpfförmigen Innenwand der kegelstumpfförmigen Ausnehmung 120 die Holzwand 118 seitlich verschoben wird, bis der Positionierkonus 112 vollständig in der kegelstumpfförmigen Ausnehmung 120 aufgenommen ist. Eine seitliche Verschiebung der Holzwand 118 erfolgt selbstverständlich dann nicht, wenn der Positionierkonus 112 exakt konzentrisch in die kegelstumpfförmige Ausnehmung 120 eingeschoben wird. Mit di ist ein Durchmesser eines Befestigungsbolzens der Vorrichtung angedeutet, vergleiche Fig. 21.

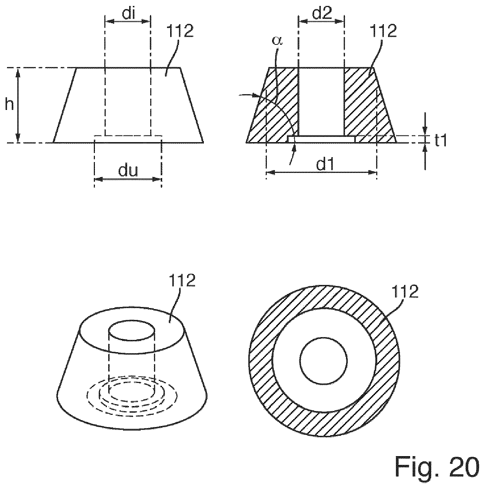

Fig. 20 zeigt mehrere Ansichten des Positionierkonus 122. Fig. 20 lässt erkennen, dass der Kegelwinkel α des Positionierkonus 112 dem Kegelwinkel α der kegelstumpfförmigen Ausnehmung 120, siehe Fig. 19, entspricht.

Im Rahmen der Erfindung kann, wie bereits erläutert wurde, der Positionierkonus 112 ohne Mittelbohrung ausgeführt sein und dann in beliebiger Weise auf der Oberseite der Lastplatte fixiert sein.

Fig. 21 zeigt mehrere aufeinanderfolgende Schritte a, b, c, d und e beim Aufsetzen eines Bauteils, beispielsweise einer Holzwand 118, auf die Vorrichtung 110, die in einem Fundament 124 befestigt ist.

Die Holzwand 118 ist mit einer Schwelle 126 versehen, wobei die Schwelle 126 mit der kegelstumpfförmigen Ausnehmung 120 und der zylindrischen Bohrung 122 versehen ist, die anhand der Fig. 19 erläutert wurde. Die kegelstumpfförmige Ausnehmung 120 und die zylindrische Bohrung 122 bilden eine Durchgangsöffnung, die die Schwelle 126 vollständig durchsetzt.

Im Zustand der Fig. a ist die Schwelle 126 noch oberhalb des Endes des Befestigungsbolzens 24 der Vorrichtung 110 angeordnet.

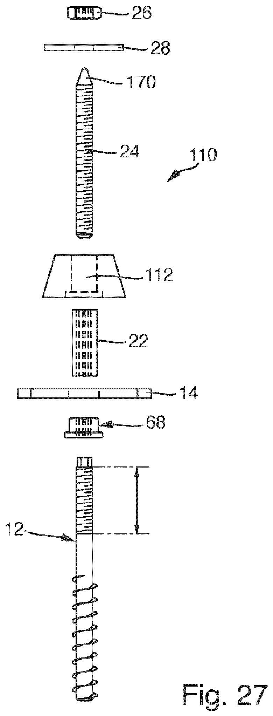

Ausgehend vom Zustand a wird die Holzwand 118 dann abgesenkt, bis sich der Befestigungsbolzen 24 in die kegelstumpfförmige Ausnehmung 120 erstreckt. Wenn das obere Ende des Befestigungsbolzens 24 dabei an die Innenwand der kegelstumpfförmigen Ausnehmung 120 anschlägt, erfolgt dadurch bereits eine Ausrichtung der Holzwand 118 parallel zur Lastplatte 14 der Vorrichtung 110. Der Befestigungsbolzen 24 kann hierzu eine verjüngte und am Ende abgerundete Spitze aufweisen, siehe Fig. 27. Die kegelstumpfförmige Ausnehmung 120 und die zylindrische Bohrung 122 in der Schwelle 126 sind dabei so bemessen, dass dann, wenn der Befestigungsbolzen 24 in die zylindrische Bohrung eingeführt ist, ausgehend vom Zustand b beim weiteren Absenken der Holzwand 118, siehe Zustand c, das große, untere Ende der kegelstumpfförmigen Ausnehmung 120 automatisch auf das kleine, obere Ende des Positionierkegels 112 gelangt.

Dieser Zustand c führt dazu, dass beim weiteren Absenken der Holzwand 118 ausgehend vom Zustand c die Holzwand 118 bzw. die Schwelle 126 der Holzwand 118 automatisch parallel zur Lastplatte 14, also in x-Richtung und y-Richtung, verschoben wird, bis im Zustand d eine Unterseite der Schwelle 126 auf der Lastplatte 14 aufliegt. Dies wird durch das Zusammenwirken der Kegelstumpfflächen des Positionierkonus 112 und der kegelstumpfförmigen Ausnehmung 120 bewirkt. Der Darstellung des Zustands d ist zu entnehmen, dass eine Außenwand des Positionierkonus 112 nun flächig an der Innenwand der kegelstumpfförmigen Ausnehmung 120 anliegt. Darüber hinaus ist zu erkennen, dass der Befestigungsbolzen 24 nun konzentrisch in der zylindrischen Bohrung 122 in der Schwelle 126 angeordnet ist und dass die Unterseite der Schwelle 126 auf der Oberseite der Lastplatte 14 aufliegt. Im Zustand d ist die Holzwand 18 damit in der vorgesehenen Art und Weise relativ zur Vorrichtung 110 und relativ zum Fundament 124 ausgerichtet, nämlich in Höhenrichtung, also in z-Richtung, sowie auch parallel zu einer Oberseite des Fundaments 124 bzw. parallel zur Lastplatte 14, also in x-Richtung und y-Richtung.

Ausgehend vom Zustand d wird im Zustand e noch die Unterlegscheibe 28 auf den Befestigungsbolzen 24 aufgesetzt und dann mittels der Befestigungsmutter 26 gegen eine Oberseite der Schwelle 126 vorgespannt. Die Holzwand 118 ist dadurch am Fundament 124 fixiert.

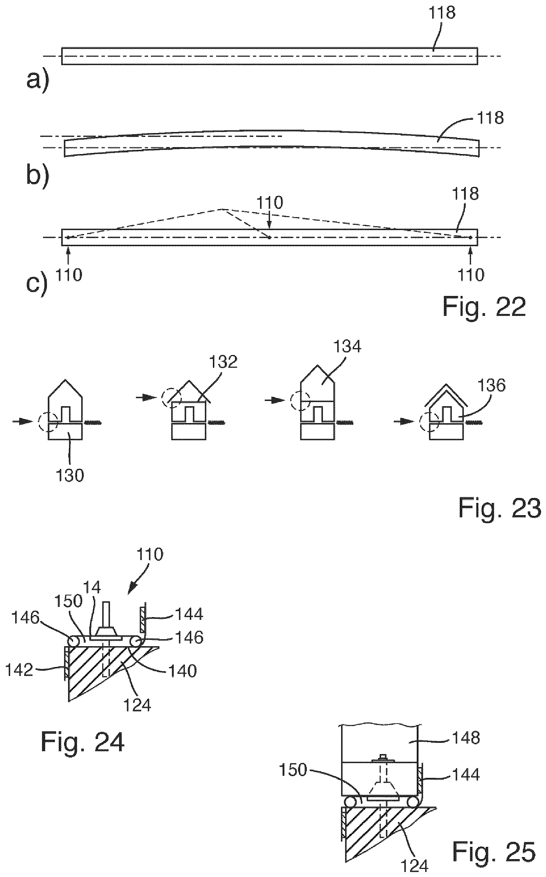

Fig. 22 zeigt drei Beispiele a, b, c, wie eine Holzwand 118 verformt sein kann und wie eine solche Verformung mittels der erfindungsgemäßen Vorrichtungen 110 korrigiert werden kann.

Fig. 22a zeigt eine nicht verformte Holzwand 118, die also exakt eben ausgeführt ist.

Fig. 22b zeigt eine, beispielsweise während der Fertigung, der Lagerung oder dem Transport der Holzwand 118 verformte Holzwand 118, die eine durchgängige Krümmung und damit eine Abweichung von der idealen Form in Fig. 22a zeigt.

Gemäß Fig. 22c wird die Holzwand 118 auf drei Vorrichtungen 110 abgesetzt. Die Krümmung der Holzwand 118 in Fig. 22b wird dadurch automatisch korrigiert. Dies dadurch, dass die Unterseite der Holzwand 118 auf die Positionierkonen der Vorrichtungen 110 aufgeschoben wird.

Fig. 22c ist zu entnehmen, dass die Krümmung der Holzwand 118 in Fig. 22b beim Aufsetzen auf die Positionierkonen der Vorrichtungen 110 automatisch korrigiert wurde und die Holzwand 118 im auf die Vorrichtungen 110 aufgesetzten Zustand wieder exakt eben ausgerichtet ist.

Fig. 23 zeigt mehrere unterschiedliche Verwendungen der erfindungsgemäßen Vorrichtungen 110. Die Vorrichtungen 110 können auf einen Sockel eines Hauses 130 aufgesetzt werden, die Vorrichtungen 110 können auf eine Traufe 132 eines Gebäudes aufgesetzt werden, die Vorrichtungen 110 können beim Aufsetzen einer Aufstockung 134 auf ein bestehendes Gebäude eingesetzt werden und die Vorrichtungen 110 können dazu verwendet werden, eine Fassade 136 vor ein bestehendes Gebäude zu setzen. In allen Fällen kann durch die erfindungsgemäßen Vorrichtungen 110 oder 10 eine Ausrichtung zumindest in z-Richtung, also in Höhenrichtung, oder sogar in allen drei Raumrichtungen, also in x-, y- und z-Richtung erfolgen.

Fig. 24 zeigt eine abschnittsweise Darstellung des Fundaments 124 der Fig. 21 mit einer in eine Oberseite des Fundaments 124 eingesetzten Vorrichtung 110.

Vor dem Einsetzen der Vorrichtung 110 in das Fundament 124 wird eine wasserdichte Folie 140 auf einem Abschnitt der Oberseite des Fundaments 124 ausgelegt und die Vorrichtung 110 wird durch die wasserdichte Folie 140 in das Fundament 124 eingeschraubt. Die wasserdichte Folie 140 sorgt für eine Abdichtung gegenüber aus dem Fundament 124 kapillar aufsteigender Feuchtigkeit.

Die wasserdichte Folie 140 ist ein Stück weit um die senkrechte äußere Begrenzungswand 142 geschlagen und an dieser äußeren Begrenzungswand mittels eines Bitumenklebebands oder eines sonstigen Klebebands befestigt.

Ein weiterer Abschnitt der wasserdichten Folie 140 ist senkrecht nach oben umgeschlagen und ebenfalls mit einem Bitumenklebeband 144 oder einem sonstigen Klebeband versehen. Dieser Abschnitt der wasserdichten Folie 140 ist dafür vorgesehen, vgl. Fig. 25, an eine Innenseite eines Wandelements angeklebt zu werden.

Zu beiden Seiten der Vorrichtung 110 sind Einfüllhilfen 146, beispielsweise in Form von Moosgummistreifen oder Moosgummirohren, vorgesehen. Die Oberseiten der Einfüllhilfen liegen auf Höhe der Oberseite der Lastplatte 14 der Vorrichtung 110 oder leicht unterhalb der Oberseite der Lastplatte 14.

Vor dem Aufsetzen des Wandelements 148 auf die Vorrichtung 110, siehe Fig. 25, wird ein fließfähiger Quellmörtel zwischen die Einfüllhilfen 146 eingefüllt. Der fließfähige Quellmörtel kann sich gleichmäßig verteilen und muss nicht aufwändig seitlich in eine Fuge zwischen der Unterseite des Wandelements 124 und der Oberseite des Fundaments 124 gestopft werden. Eine Oberfläche des Quellmörtels liegt vor dem Aufsetzen des Wandelements 148 maximal auf der Höhe der Oberseite der Lastplatte 14.

Anschließend an den Zustand der Fig. 24, in dem der Quellmörtel 150 bereits eingefüllt ist, wird das Wandelement 148 in der beschriebenen Weise auf die Vorrichtung 110 abgesetzt und dadurch, vgl. Fig. 21, automatisch relativ zu der Vorrichtung 110 und damit relativ zum Fundament 124 ausgerichtet.

Nach dem Aufsetzen wird das Klebeband 144 an die Innenseite des Wandelements 148 angeklebt. Der Quellmörtel 150 härtet aus und quillt dabei insbesondere auf. Im Zustand der Fig. 25 ist dadurch eine wasserdichte und winddichte Abdichtung zwischen einer Unterseite des Wandelements 148 und einer Oberseite des Fundaments 124 geschaffen.

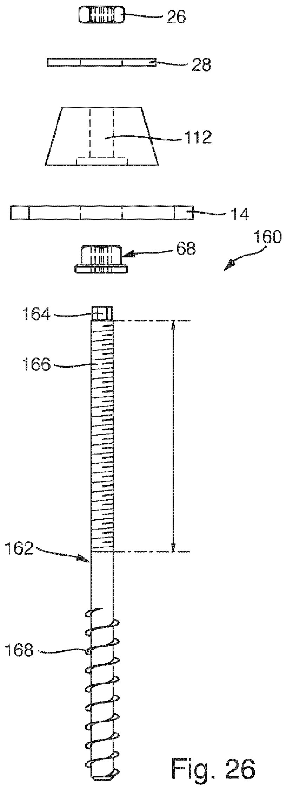

Fig. 26 zeigt eine auseinandergezogene Darstellung einer erfindungsgemäßen Vorrichtung 160. Die Vorrichtung 160 ist mit einer Stockschraube 162 versehen, die an ihrem einen, oberen Ende mit einer Antriebsausbildung 164 und anschließend daran mit einem Befestigungsgewinde 166 versehen ist und die an ihrem anderen Ende mit einem Betongewinde 168 versehen ist, das im Fundament, vgl. Fig. 21, befestigt wird.

Die Auflagemutter 30 wird auf das Befestigungsgewinde 166 aufgeschraubt und dient als Auflage für die Lastplatte 14. Der Positionierkonus 112 wird dann auf das Befestigungsgewinde 166 aufgeschoben, bis er mit seiner Unterseite auf der Oberseite der Lastplatte 14 aufliegt. Die Beilagscheibe 28 und die Befestigungsmutter 26 dienen, siehe Fig. 21, zum Fixieren eines Bauteils an der Vorrichtung 160. Die Vorrichtung 160 kommt im Unterschied zu der Vorrichtung 110 der Fig. 16 mit weniger Bauteilen aus, nämlich mit lediglich sechs Bauteilen anstelle von acht Bauteilen der Vorrichtung 110. Die Funktion der Vorrichtung 160 entspricht aber der bereits erläuterten Funktion der Vorrichtung 110 beim Aufsetzen und automatischen Ausrichten von Bauteilen.

Fig. 27 zeigt eine auseinandergezogene Darstellung der Vorrichtung 110 der Fig. 16. Die Auflagemutter 30 wird auf ein Befestigungsgewinde der Betonschraube 12 geschraubt und dient als Auflager für die Lastplatte 14. Die Gewindemuffe 22 wird ebenfalls auf das Befestigungsgewinde der Betonschraube 12 aufgeschraubt. Der Positionierkonus 112 wird auf die Gewindemuffe 122 aufgeschoben, bis die Unterseite des Positionierkonus auf einer Oberseite der Lastplatte 14 aufliegt. Der Befestigungsbolzen 24 wird in die Gewindemuffe 22 eingeschraubt und weist eine Zentrierspitze 170 auf, die das Einführen des Befestigungsbolzens 24 in die kegelstumpfförmige Ausnehmung 120 und/oder die zylindrische Bohrung 122 in einem Bauteil, insbesondere der Schwelle 126 der Holzwand 118, siehe Fig. 21, erleichtert.

Die Beilagscheibe 28 wird auf den Befestigungsbolzen 24 aufgesetzt und mit der Befestigungsmutter 26 gegen eine Oberseite des Bauteils, insbesondere der Oberseite der Schwelle 126 vorgespannt.

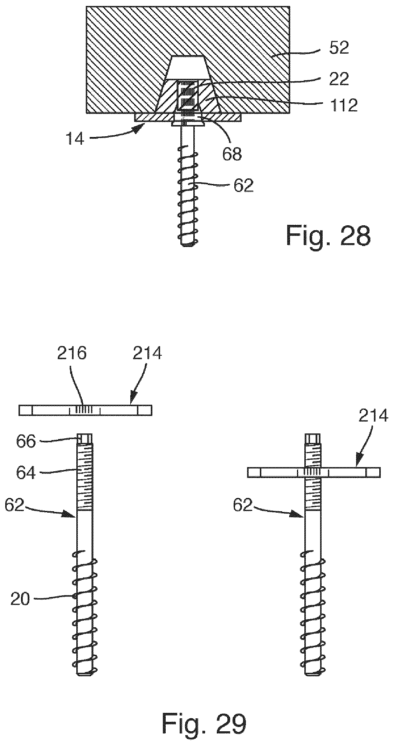

Fig. 28 zeigt in einer teilweise geschnittenen Darstellung eine Anordnung mit einer erfindungsgemäßen Vorrichtung gemäß einer weiteren Ausführungsform. Auf die Betonschraube 62 ist die Auflagemutter 68 aufgeschraubt und oberhalb der Auflagemutter 68 ist die Gewindemuffe 22 angeordnet, wobei die Gewindemuffe 22 wie die Auflagemutter 68 auf den Gewindeabschnitt 64 der Betonschraube 62 aufgeschraubt sind. Die Lastplatte 14 liegt auf der Auflagemutter 68 auf. Der Positionierkegel 112 ist auf die Gewindemuffe 22 aufgeschoben und liegt mit seiner Unterseite auf der Oberseite der Lastplatte 14 auf. Der Positionierkegel 112 ist in Richtungen parallel zu der Lastplatte 14 mittels der Gewindemuffe 22 fixiert. Ein Bauteil 52 liegt auf der Lastplatte 14 auf und ist mit einer kegelstumpfförmigen Ausnehmung versehen, deren Kegelwinkel dem Kegelwinkel des Positionierkonus 112 entspricht. Eine Innenwand der kegelstumpfförmigen Ausnehmung liegt abschnittsweise an einer Umfangswand des Positionierkonus 112 an. Mittels des Positionierkonus 112 können parallel zur Lastplatte 14 wirkende Kräfte, beispielsweise durch Wind auf das Bauteil 52 verursachte Kräfte, in die Betonschraube 62 eingeleitet und in ein Fundament abgetragen werden, das in Fig. 28 nicht dargestellt ist. Mittels des Positionierkonus 112 ist das auf der Lastplatte 14 aufliegende Bauteil 52 infolgedessen in Richtungen parallel zur Lastplatte 14, also in x-Richtung und in y-Richtung, fixiert.

Fig. 29 zeigt eine weitere erfindungsgemäße Vorrichtung in zwei Zuständen. Die Lastplatte 214 ist mit einer mittigen Gewindebohrung 216 versehen und wird auf den, insbesondere metrischen Gewindeabschnitt 64 der Betonschraube 62 aufgeschraubt, wobei sich der Gewindeabschnitt 64 an die Antriebsausbildung 66 anschließt. Am Schaft der Betonschraube 62 ist auch das Betongewinde 20 vorgesehen. Eine Auflagemutter für die Lastplatte ist bei dieser Ausführungsform nicht erforderlich. Fig. 29 zeigt links die Vorrichtung, bevor die Lastplatte 214 auf den Gewindeabschnitt 64 der Betonschraube 62 aufgeschraubt wird, und rechts die Vorrichtung in einem Zustand, in dem die Lastplatte 214 bereits auf den Gewindeabschnitt 64 der Betonschraube 62 aufgeschraubt wurde.

## Patentansprüche

1. Vorrichtung zum Ausrichten von Bauteilen, insbesondere von Wandelementen oder Wandscheiben im Holzbau, mit einer Betonschraube, wobei die Betonschraube einen Schraubenschaft mit einem Gewinde und einen Schraubenkopf mit einer Antriebsausbildung aufweist, **dadurch gekennzeichnet, dass** eine Lastplatte vorgesehen ist, wobei die Lastplatte wenigstens im montierten Zustand der Vorrichtung mit der Betonschraube verbunden ist und dass die Betonschraube im Bereich ihres Schraubenkopfes zum Anbringen wenigstens eines Befestigungsmittels, insbesondere eine Schraube oder eine Mutter, zum Fixieren eines auf der Lastplatte aufliegenden Bauteils relativ zur Lastplatte ausgebildet ist.

2. Vorrichtung nach Anspruch 1, **dadurch gekennzeichnet, dass** der Schraubenkopf der Betonschraube mit einem Gewindezapfen versehen ist, der eine Verlängerung des Schraubenschafts bildet.

3. Vorrichtung nach Anspruch 2, **dadurch gekennzeichnet, dass** die Betonschraube einen Auflageflansch für die Lastplatte aufweist, wobei der Auflageflansch zwischen dem Schraubenschaft und dem Gewindezapfen angeordnet ist.

4. Vorrichtung nach Anspruch 1, **dadurch gekennzeichnet, dass** die Betonschraube als Stockschraube ausgebildet ist und angrenzend an den Schraubenkopf mit einem Befestigungsgewinde versehen ist.

5. Vorrichtung nach Anspruch 1, **dadurch gekennzeichnet, dass** der Schraubenkopf der Betonschraube mit einer Innengewindebohrung versehen ist.

6. Vorrichtung nach wenigstens einem der vorstehenden Ansprüche, **dadurch gekennzeichnet, dass** die Betonschraube und die Lastplatte als separate Teile ausgebildet sind.

7. Vorrichtung nach wenigstens einem der vorstehenden Ansprüche, **dadurch gekennzeichnet, dass** die Betonschraube einen Auflageflansch aufweist und dass die Lastplatte wenigstens im montierten Zustand der Vorrichtung auf dem Auflageflansch der Betonschraube aufliegt, wobei insbesondere der Auflageflansch auf seiner, der Lastplatte zugewandten Seite konvex abgerundet ausgebildet ist.

8. Vorrichtung nach wenigstens einem der vorstehenden Ansprüche, **dadurch gekennzeichnet, dass** im verbundenen Zustand von Lastplatte und Betonschraube die Lastplatte relativ zum Schraubenschaft um Kippachsen senkrecht zur Mittelängsachse des Schraubenschafts um einen kleinen Winkel, insbesondere um einen Winkel zwischen +zehn Grad und -zehn Grad, verkippt werden kann.

9. Vorrichtung nach wenigstens einem der vorstehenden Ansprüche, **dadurch gekennzeichnet, dass** die Lastplatte eine mittige Antriebsausbildung aufweist, die an die Antriebsausbildung der Betonschraube angepasst ist, wobei im montierten Zustand der Vorrichtung die mittige Antriebsausbildung der Lastplatte an der Antriebsausbildung der Betonschraube angreift oder in die Antriebsausbildung der Betonschraube eingreift, so dass von der Lastscheibe auf die Betonschraube ein Drehmoment zum Einschrauben oder Ausschrauben des Gewindes der Betonschraube übertragbar ist, und wobei die mittige Antriebsausbildung der Lastplatte und die Antriebsausbildung der Betonschraube so ausgebildet sind, dass die Lastplatte relativ zum Schraubenschaft um Kippachsen senkrecht zur Mittelängsachse des Schraubenschafts um einen kleinen Winkel, insbesondere um einen Winkel zwischen +zehn Grad und -zehn Grad, verkippt werden kann, wobei insbesondere die Betonschraube, insbesondere der Kopf der Betonschraube, einen Auflageflansch zum Auflegen der Lastplatte aufweist, wobei der Auflageflansch auf seiner, der Lastplatte zugwandten Seite konvex abgerundet ausgebildet ist.

10. Vorrichtung nach Anspruch 9, **dadurch gekennzeichnet, dass** die mittige Antriebsausbildung der Lastplatte und die Antriebsausbildung der Betonschraube so ausgebildet sind, dass bei Belastung der Lastplatte in Richtung auf das Gewinde des Schraubenschafts zu sich die Antriebsausbildung der Lastplatte und die Antriebsausbildung der Betonschraube zu einem spielfreien Zustand hin verklemmen.

11. Vorrichtung nach wenigstens einem der vorstehenden Ansprüche, **dadurch gekennzeichnet, dass** die Lastplatte eine äußere Antriebsausbildung an ihrem Außenumfang aufweist.

12. Vorrichtung nach wenigstens einem der vorstehenden Ansprüche, **dadurch gekennzeichnet, dass** der Schraubenschaft abschnittsweise von einem schlauchartigen Element aus elastisch und/oder plastisch deformierbarem Material, insbesondere Kunststoff oder Gummi, umgeben ist, um zwischen einem Fundament und einer Unterseite des Schraubenkopfes und/oder einer Unterseite der Lastplatte im montierten Zustand eine Abdichtung gegenüber aufsteigender Feuchtigkeit bereitzustellen.

13. Vorrichtung nach wenigstens einem der vorstehenden Ansprüche, **dadurch gekennzeichnet, dass** die Lastscheibe auf ihrer Oberseite mit reibungserhöhenden Elementen, insbesondere Vorsprüngen, versehen ist und/oder, dass die Lastscheibe auf ihrer Oberseite mit einer Abdichtung, insbesondere einer Dichtfolie oder Dichtscheibe, versehen ist.

14. Vorrichtung nach wenigstens einem der vorstehenden Ansprüche, **dadurch gekennzeichnet, dass** ein Positionierkonus (112) vorgesehen ist, der auf einer Oberseite der Lastplatte (14) angeordnet ist, wobei die Oberseite der Lastplatte (14) zum Aufliegen eines Bauteils (118, 126) vorgesehen ist, wobei sich der Positionierkonus (112) in einer Richtung von der Oberseite der Lastplatte (14) weg verjüngt, wobei insbesondere das Befestigungsmittel zum Fixieren eines auf der Lastplatte (14) aufliegenden Bauteils (126, 118) konzentrisch zu einer Mittellängsachse des Positionierkonus (112) angeordnet ist.

15. Anordnung mit wenigstens zwei Vorrichtungen nach wenigstens einem der vorstehenden Ansprüche, einem Bauteil und einem Fundament, **dadurch gekennzeichnet, dass** das Bauteil mit seiner Unterseite auf Oberseiten der wenigstens zwei Lastplatten der Vorrichtungen aufliegt und dass die Betonschrauben der Vorrichtungen in das Fundament eingreifen, wobei insbesondere auf wenigstens einer der Lastplatten ein Positionierkonus (112) vorgesehen ist und wobei das Bauteil (126, 118) von seiner Unterseite mit wenigstens einer kegelstumpfförmigen Ausnehmung (122) versehen ist, wobei der Positionierkonus (122) in der kegelstumpfförmigen Ausnehmung (122) aufgenommen ist.
